# FASCICULE DE BREVET EUROPEEN

(11) **EP 3 880 453 B1**
(45) Date de publication et mention de la délivrance du brevet: **05.04.2023**
(21) Numéro de dépôt: 19832720.7
(22) Date de dépôt: 15.11.2019
(51) Int. Cl.: B29D 30/16, B25J 9/00, B25J 9/02, B29D 30/46, B26D 3/00, B26D 1/153, B29D 30/30, B26D 1/28, B26D 1/26

(54) **DISPOSITIF MANIPULATEUR A ARCHITECTURE TRIANGULAIRE ET INSTALLATION DE FABRICATION DE BANDAGES UTILISANT UN TEL DISPOSITIF MANIPULATEUR POUR LA POSE DE BANDELETTES**
MANIPULATORVORRICHTUNG MIT DREIECKIGER ARCHITEKTUR UND ANLAGE ZUR HERSTELLUNG VON BANDAGEN UNTER VERWENDUNG EINER SOLCHEN MANIPULATORVORRICHTUNG ZUM PLATZIEREN VON STREIFEN
MANIPULATOR DEVICE HAVING A TRIANGULAR ARCHITECTURE AND INSTALLATION FOR MANUFACTURING BANDAGES USING SUCH A MANIPULATOR DEVICE FOR PLACING STRIPS

(30) Priorité: 16.11.2018 FR 1860646
(43) Date de publication de la demande: 22.09.2021
(73) Titulaire: COMPAGNIE GENERALE DES ETABLISSEMENTS MICHELIN, 63000 Clermont-Ferrand (FR)
(72) Inventeur: PIALOT, Frédéric, 63040 CLERMONT-FERRAND Cedex 9 (FR); BESSAC, Christophe, 63040 CLERMONT-FERRAND Cedex 9 (FR); SEVAILLE, Alain, 63040 CLERMONT-FERRAND Cedex 9 (FR)
(74) Mandataire: Redouté, Gilles Pierre
(86) Numéro de dépôt international: PCT/FR2019/052728
(87) Numéro de publication internationale: WO 2020/099807

(56) Documents cités:
- EP-A1- 2 692 486
- WO-A1-02/085580
- JP-A- 2006 159 443

## Description

La présente invention concerne le domaine général des dispositifs manipulateurs, tels que les robots, qui permettent de déplacer et positionner, par rapport à un socle, une plate-forme, ou « tête », qui accueille un objet à manipuler, tel que par exemple un outil.

La présente invention concerne plus particulièrement les installations de fabrication de nappes de renfort pour bandages, notamment pour bandages pneumatiques, au sein desquelles on utilise un dispositif manipulateur pour poser une série de bandelettes sur un support d'assemblage, tel qu'un tapis, en aboutant successivement lesdites bandelettes les unes aux autres par leurs lisières de sorte à constituer progressivement la nappe de renfort.

Il est connu, notamment par le document EP-1 048 445, un dispositif manipulateur dont la plate-forme est pourvue d'un galet presseur destiné à presser une bandelette contre un support d'assemblage cylindrique, et qui comporte, pour positionner le galet presseur en vis-à-vis dudit support d'assemblage cylindrique, un empilement de tables de translation croisées mû par un moteur qui est associé à une vis sans fin.

De tels dispositifs manipulateurs présentent toutefois, en raison du nombre et du volume de leurs composants, un fort encombrement, une importante inertie, et un coût élevé de réalisation.

On connaît par ailleurs, dans un autre domaine d'application qu'est celui des machines-outils, d'autres types de dispositifs manipulateurs permettant de déplacer une plate-forme porte-outil et/ou de modifier l'assiette de ladite plate-forme.

Ainsi, en particulier, le document WO-02/49811 prévoit de suspendre la plate-forme porte-outil au moyen d'un mécanisme porteur qui comporte plusieurs bras qui sont portés par des chariots montés mobiles en translation sur un rail fixé à un socle, lesdits bras étant agencés deux à deux pour former, avec la plate-forme d'une part et avec leur chariot respectif de rattachement d'autre part, une pluralité de parallélogrammes articulés.

Si une telle architecture permet effectivement de réaliser une pluralité de mouvements, elle présente toutefois certains inconvénients.

En effet, de tels mécanismes porteurs présentent tout d'abord une relative complexité.

Ensuite, la nécessaire multiplicité des composants, et notamment le nombre élevé de chariots, de bras, et d'organes d'articulations, confère à de tels mécanismes porteurs une masse, et donc une inertie élevées.

En outre, les inévitables jeux dans les organes de guidage et les organes d'articulation confèrent nécessairement au mécanisme porteur une certaine souplesse indésirable, qui rend d'autant plus difficile la maîtrise de l'inertie du mécanisme.

Or, la combinaison d'une inertie élevée et d'une telle souplesse rend notamment le mécanisme porteur particulièrement sensible aux effets de l'accélération, et plus particulièrement à un phénomène de secousses induites par une composante appelée « vecteur d'à-coup » ou « jerk », qui correspond à la dérivée première, par rapport au temps, du vecteur accélération.

Par conséquent, de tels mécanismes porteurs connus peuvent être soumis, par nécessité, et notamment pour préserver leur durée de vie, à certaines restrictions quant aux accélérations mises en oeuvre, quant à leur vitesse d'exécution, et donc quant à la cadence maximale de production qu'ils permettent d'atteindre. Le document de brevet WO 02/085580 A1 divulgue les caractéristiques du préambule de la revendication 1.

Les objets assignés à l'invention visent par conséquent à remédier aux inconvénients susmentionnés et à proposer un dispositif manipulateur qui, tout en conservant une polyvalence de mouvements, soit précis, relativement simple et compact, qui possède une rigidité élevée et une inertie relativement faible, et qui présente par conséquent une faible sensibilité au jerk et permette donc d'atteindre sans dommage des accélérations et des cadences de production particulièrement élevées.

Les objets assignés à l'invention sont atteints au moyen d'un dispositif manipulateur qui comprend un socle ainsi qu'un mécanisme porteur qui est supporté par ledit socle et qui porte une plate-forme destinée à recevoir un objet à manipuler, tel qu'un outil, ledit dispositif manipulateur étant caractérisé en ce que le mécanisme porteur forme un triangle articulé qui comprend :
- un premier bras qui est porté par un premier chariot guidé en translation sur le socle, et qui s'articule avec ledit premier chariot selon une première liaison pivot autour d'un premier axe de pivot qui forme un premier sommet du triangle articulé,
- un second bras qui est porté par un second chariot, distinct du premier chariot et guidé en translation sur le socle, et qui s'articule avec ledit second chariot selon une seconde liaison pivot autour d'un second axe de pivot, lequel est parallèle au premier axe de pivot et forme un second sommet du triangle articulé,
- un siège, qui offre un support à la plate-forme et qui correspond à une intersection du premier bras et du second bras, intersection au niveau de laquelle lesdits premier et second bras s'articulent l'un par rapport à l'autre selon une troisième liaison pivot, autour d'un troisième axe de pivot qui est parallèle au premier axe de pivot et au second axe de pivot et qui forme un troisième sommet du triangle articulé,
- un module d'asservissement qui pilote d'une part un premier moteur, propre au premier chariot, et d'autre part un second moteur, propre au second chariot et distinct du premier moteur, de sorte à pouvoir asservir distinctement les mouvements respectifs de translation du premier et du second chariot par rapport au socle, afin de pouvoir modifier la position du siège par rapport au socle,
- une interface d'orientation en lacet qui comprend une quatrième liaison pivot, dite « pivot différentiel de lacet », selon laquelle la plate-forme s'articule sur le siège, à la fois relativement au premier bras et relativement au second bras, selon un mouvement de rotation en lacet dit « mouvement différentiel en lacet », autour d'un quatrième axe de pivot dit « axe différentiel de lacet » qui est coaxial au troisième axe de pivot.

Avantageusement, la structure triangulaire proposée, qui limite le nombre d'articulations et le nombre d'organes en mouvement, permet de concilier légèreté et rigidité.

Dans la pratique, les inventeurs ont constaté qu'un dispositif manipulateur selon l'invention pouvait atteindre sans dommage et sans perte de précision des accélérations considérables, supérieures à 10G (dix fois l'accélération de pesanteur), voire égales à 100G (cent fois l'accélération de pesanteur), et donc des vitesses d'exécution et des cadences de production très élevées.

En outre, le choix d'une structure triangulaire dont on peut librement contrôler le déplacement de deux des sommets, grâce à la motorisation individuelle des premier et second chariots correspondants, permet, selon que l'on éloigne l'un de l'autre le premier et le second chariot, que l'on rapproche l'un de l'autre le premier et le second chariot, et/ou que l'on déplace conjointement le premier et le second chariot selon une composante de déplacement commune, de positionner le troisième sommet en tout point d'un repère cartésien attaché à un plan de référence normal aux premier, second et troisième axes de pivot, et donc de faire suivre au siège, et donc plus globalement à la plate-forme qui se rattache audit siège, toute trajectoire souhaitée dans ledit repère cartésien, ce qui rend le dispositif manipulateur à la fois polyvalent et précis.

Avantageusement, l'invention prévoit de surcroît une interface d'orientation en lacet qui permet, quelle que soit la position que les chariots et les bras confèrent au siège dans le plan de référence, et plus particulièrement quelle que soit la position que les chariots et les bras confèrent au troisième axe de pivot dans ledit plan de référence, d'orienter librement la plate-forme en lacet autour dudit troisième axe de pivot, selon un degré de liberté différentiel de rotation en lacet, qui n'est pas, en lui-même, tributaire des orientations angulaires respectives du premier et du second bras dans ledit plan de référence.

On peut ainsi ajuster l'orientation en lacet de la plate-forme, en particulier l'orientation absolue en lacet de ladite plate-forme par rapport au socle dans un repère absolu attaché audit socle, de manière indépendante, sans être contraint par la position qu'occupe le troisième axe de pivot dans le plan de référence ni par l'orientation en lacet correspondante de l'un ou l'autre des premier et second bras.

En particulier, grâce à l'interface d'orientation en lacet selon l'invention, on pourra si on le souhaite conférer à la plate-forme une orientation en lacet choisie, considérée de manière absolue dans le référentiel attaché au socle, puis conserver, grâce à une compensation adaptée, une orientation en lacet constante de la plate-forme par rapport au socle, même lorsque l'on déplacera librement le siège, et donc ladite plate-forme, dans le repère cartésien du plan de référence, au moyen des chariots.

De même, grâce à cette même interface d'orientation en lacet selon l'invention, on pourra si on le souhaite modifier l'orientation en lacet de la plate-forme une fois le siège amené à la position cartésienne souhaitée dans le plan de référence, et/ou au cours du déplacement du siège dans le plan de référence, par exemple pour adapter l'orientation en lacet de la plate-forme au suivi tangentiel d'une surface incurvée, telle que par exemple la surface incurvée, concave ou bien de préférence convexe, d'un support d'assemblage torique, de manière à ce que l'outil, et plus particulièrement l'axe du galet presseur de pose de bandelette, qui est porté par ladite plate-forme, se présente à tout moment selon une orientation qui est sensiblement tangente au point de la surface considéré, et exerce ainsi un effort d'appui sensiblement normal à ladite surface pour appliquer ladite bandelette.

Enfin, la simplicité de la structure triangulaire, en particulier si cette structure est associée à certaines géométries particulières, par exemple à un guidage rectiligne du premier chariot et du second chariot selon un axe de guidage commun et/ou à des bras qui sont choisis de longueurs identiques pour former un agencement triangulaire isocèle, permettra de réaliser toute trajectoire du siège, et plus globalement toute trajectoire librement choisie de la plate-forme, au moyen de lois d'asservissement relativement simples, et donc peu gourmandes en ressources de calcul.

On notera que le dispositif manipulateur selon l'invention forme avantageusement un robot de type « robot cartésien », particulièrement précis, simple, léger et stable, qui suit un système de coordonnées cartésiennes et qui permet donc un positionnement rapide et précis du siège, et plus globalement de la plate-forme, dans le repère cartésien absolu attaché au plan de référence et au socle, quelle que soit la position ou la trajectoire visée, par comparaison avec un robot de type anthropomorphe qui comprendrait un unique bras articulé à axes multiples (du type robot à six axes, par exemple), et qui pourrait de ce fait être davantage sujet, dans certaines circonstances, à des phénomènes d'inertie ou de manque de précision.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :

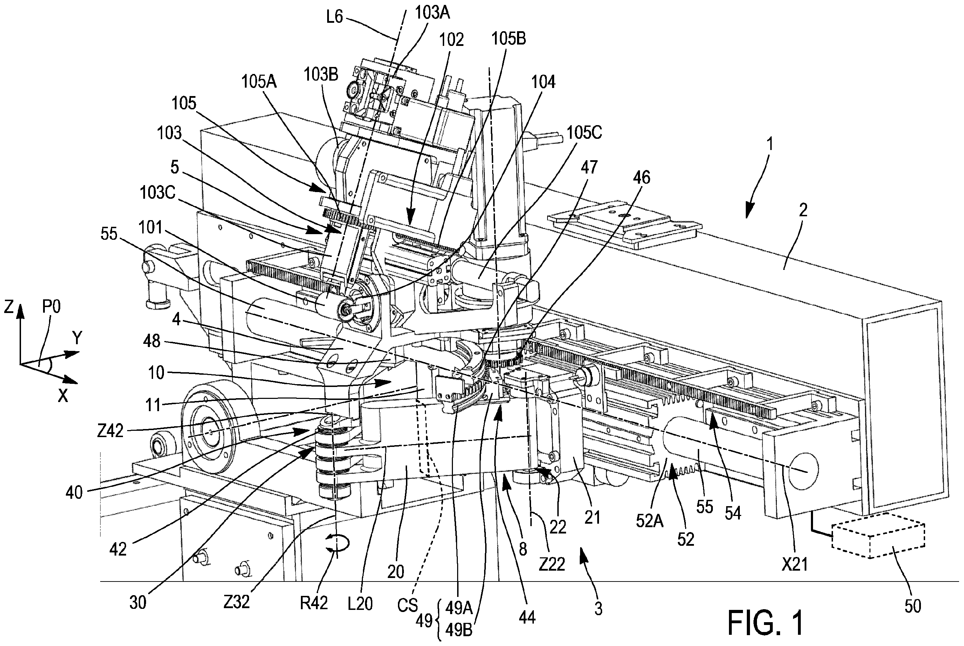

La figure 1 illustre, selon une vue en perspective, un exemple de dispositif manipulateur selon l'invention.

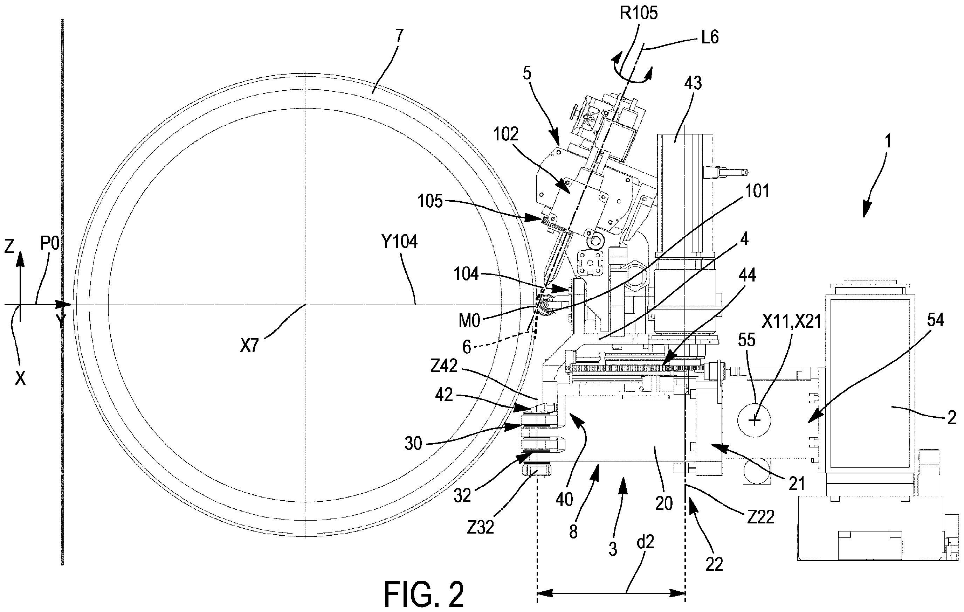

La figure 2 illustre, selon une vue d'ensemble de côté, une installation de fabrication de nappes de renfort destinées à la constitution de bandages, notamment de bandages pneumatiques, ladite installation utilisant le dispositif manipulateur de la figure 1 pour poser et abouter les unes aux autres des bandelettes sur un support d'assemblage qui présente une forme de révolution, par exemple une forme torique.

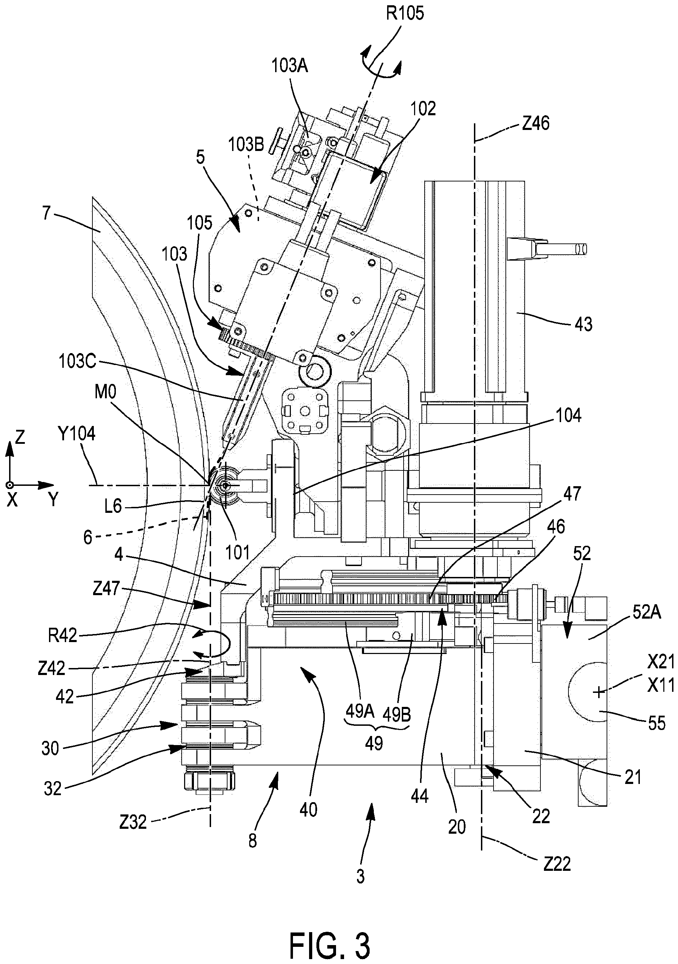

La figure 3 illustre, selon une vue de détail de côté, une partie de l'installation de la figure 2.

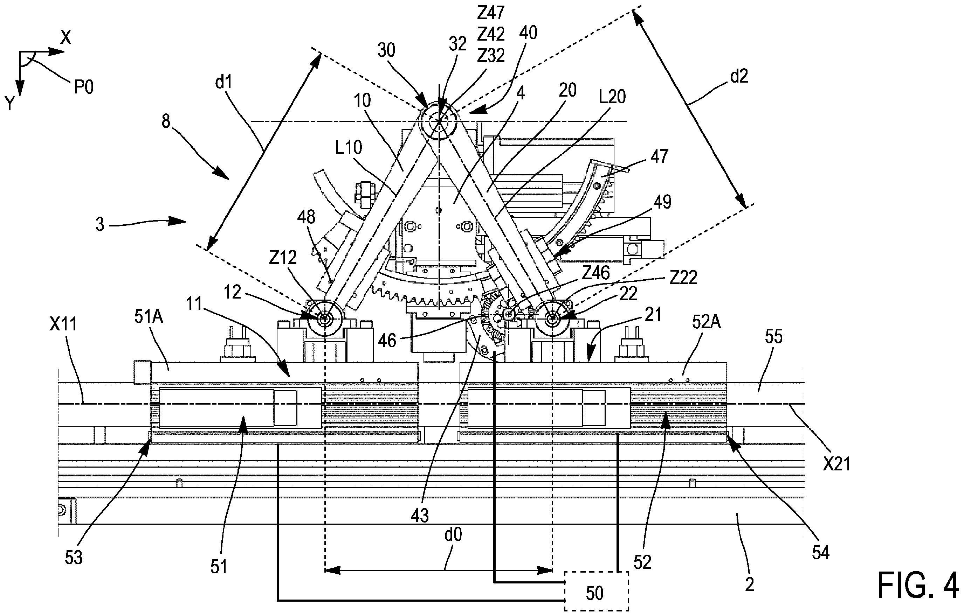

La figure 4 illustre, selon une vue de dessous, l'agencement triangulaire du dispositif manipulateur de la figure 1, dans une première configuration des chariots.

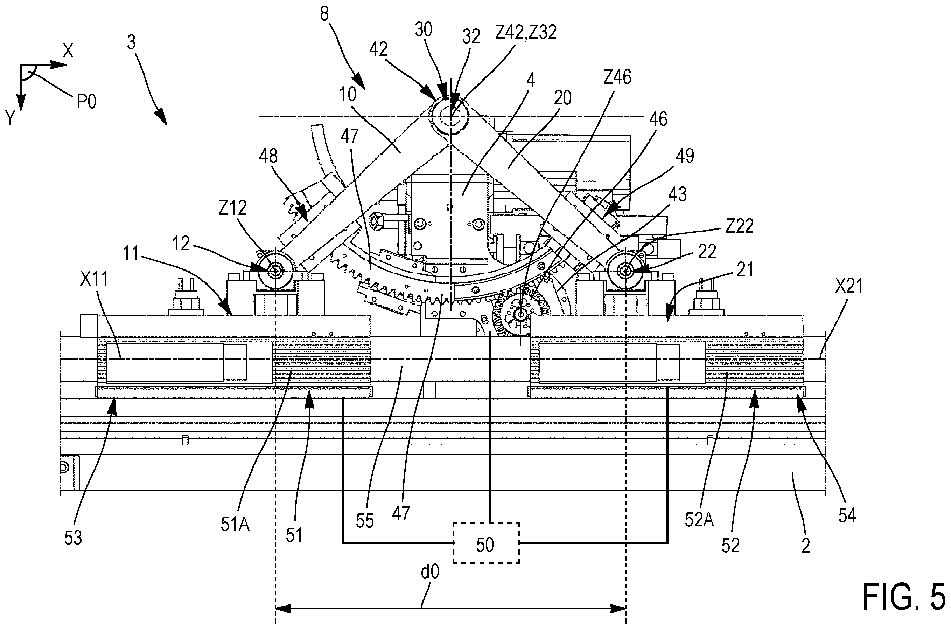

La figure 5 illustre, selon une vue de dessous, l'agencement triangulaire du dispositif manipulateur de la figure 1, dans une seconde configuration des chariots, selon laquelle la distance d'écartement des chariots, dite « entraxe de base », est plus grande que dans la première configuration de la figure 4, et donc selon laquelle le siège est plus proche de la base délimitée par les chariots qu'il ne l'était dans la première configuration, et selon laquelle l'angle au sommet du triangle articulé, compris entre le premier et le second bras, est davantage ouvert qu'il ne l'était dans ladite première configuration.

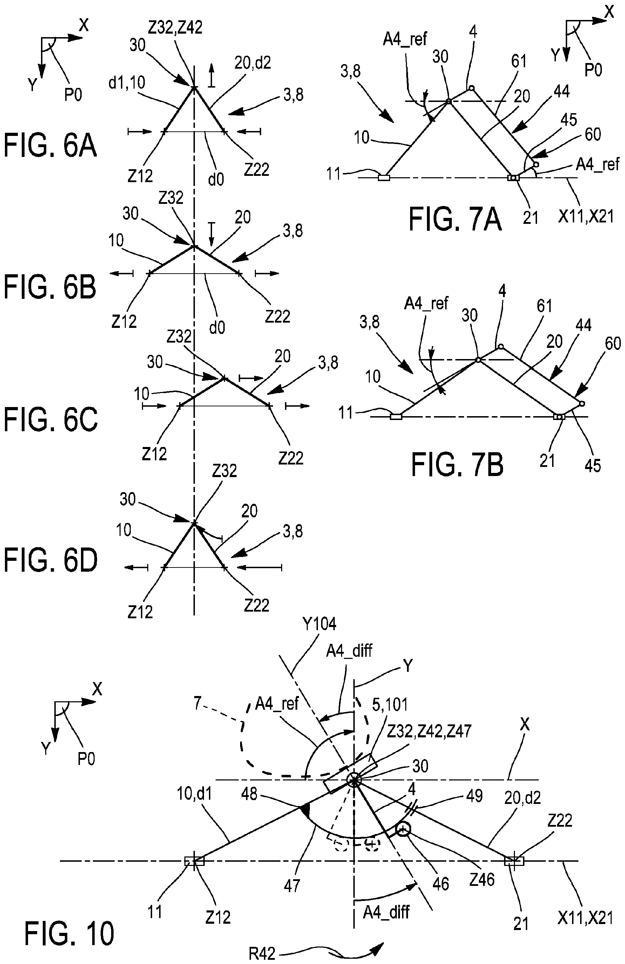

Les figures 6A, 6B, 6C, 6D illustrent, selon des vues schématiques de dessous, en projection dans un plan de référence qui est normal aux premier, second et troisième axes de pivot, des exemples de mouvements du siège qui peuvent être obtenus en déplaçant le premier chariot et/ou le second chariot.
Les figures 7A et 7B illustrent, selon des vues schématiques de dessous, dans un plan de référence normal au troisième axe de pivot, le principe de fonctionnement d'un système compensateur qui est utilisable par un dispositif manipulateur selon l'invention et qui permet de conserver l'orientation absolue en lacet de la plate-forme par rapport au socle lors des mouvements des premier et second chariots, où ledit système compensateur utilise un parallélogramme articulé.

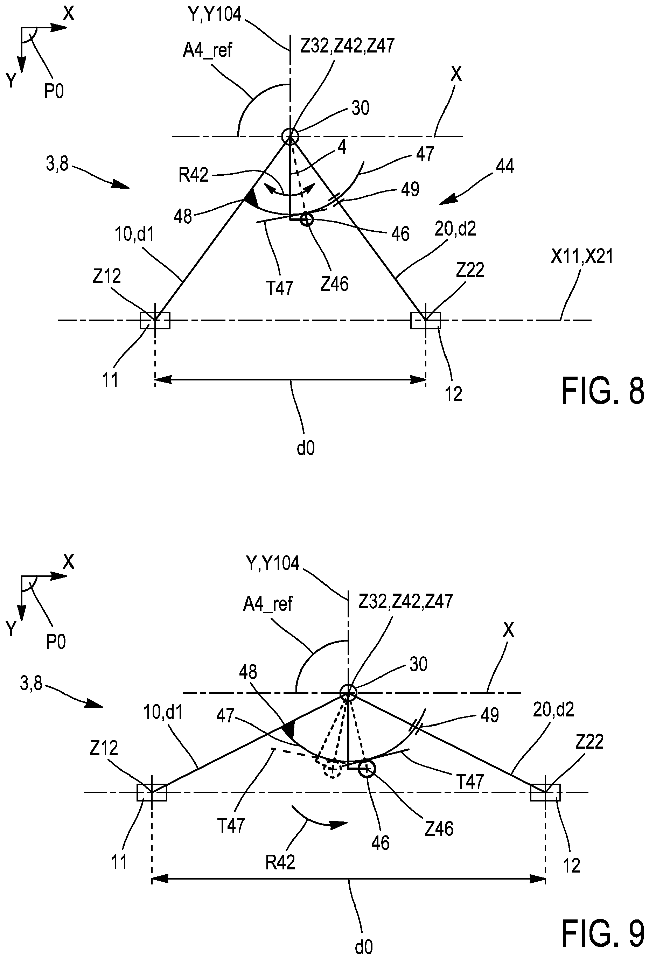

Les figures 8 et 9 illustrent, selon des vues schématiques de dessous, dans un plan de référence normal au troisième axe de pivot, le principe de fonctionnement d'un système compensateur qui est utilisé par le dispositif manipulateur des figures 1 à 5 et qui permet de conserver l'orientation absolue en lacet de la plate-forme par rapport au socle lors des mouvements de premier et second chariots, ledit système compensateur utilisant ici une couronne dentée et un pignon associé à un moteur d'orientation en lacet.
La figure 10 illustre, selon une vue schématique de dessous, dans un plan de référence normal au troisième axe de pivot, le principe d'une modification active de l'orientation en lacet de la plate-forme par rapport au siège, et plus globalement d'une modification active de l'orientation absolue en lacet de la plate-forme par rapport au socle, au moyen d'un moteur d'orientation en lacet qui équipe l'interface d'orientation en lacet, ici en particulier pour présenter un outil porté par la plate-forme de façon tangente à la surface convexe d'un support d'assemblage toroïdal convexe.

La présente invention concerne un dispositif manipulateur 1 qui comprend un socle 2, ainsi qu'un mécanisme porteur 3. Ledit mécanisme porteur 3 est supporté par ledit socle 2 et porte une plate-forme 4 destinée à recevoir un objet à manipuler 5.

Le socle 2 peut de préférence constituer un bâti fixe, qui pourra par exemple être posé sur un élément de bâtiment, tel que le sol, voire être fixé audit élément de bâtiment pour plus de stabilité.

L'objet à manipuler 5 peut être par exemple une pièce à travailler, ou bien encore un outil, notamment un outil de pose 5 qui est agencé pour acheminer et poser une ou des bandelettes 6 sur un support d'assemblage 7, et plus particulièrement pour abouter successivement sur ledit support d'assemblage 7 plusieurs desdites bandelettes 6 les unes aux autres par leurs lisières respectives.

Par commodité de description, on pourra assimiler objet à manipuler 5 et outil de pose dans ce qui suit.

Selon l'invention, et tel que cela est notamment visible sur les figures 1, 4 et 5, le mécanisme porteur 3 forme un triangle articulé 8, qui comprend :
- un premier bras 10 qui est porté par un premier chariot 11 guidé en translation sur le socle 2. Ledit premier bras 10 s'articule avec ledit premier chariot 11 selon une première liaison pivot 12 autour d'un premier axe de pivot Z12 qui forme un premier sommet du triangle articulé 8 ;
- un second bras 20 qui est porté par un second chariot 21, lequel second chariot 21 est distinct du premier chariot 11 et guidé en translation sur le socle 2. Ledit second bras 20 s'articule avec ledit second chariot 21 selon une seconde liaison pivot 22 autour d'un second axe de pivot Z22, lequel est parallèle au premier axe de pivot Z12 et forme un second sommet du triangle articulé 8 ;
- un siège 30, qui offre un support à la plate-forme 4 et qui correspond à une intersection du premier bras 10 et du second bras 20, intersection au niveau de laquelle lesdits premier et second bras 10, 20 s'articulent l'un par rapport à l'autre selon une troisième liaison pivot 32, autour d'un troisième axe de pivot Z32 qui est parallèle au premier axe de pivot Z12 et au second axe de pivot Z22 et qui forme un troisième sommet du triangle articulé 8.

Avantageusement, le siège 30, situé à l'intersection du premier bras 10 et du second bras 20, forme donc d'une part une charnière entre le premier bras 10 et le second bras 20 qui convergent depuis leurs chariots respectifs 11, 21 jusqu'audit siège 30, tandis que, d'autre part, la plate-forme 4 est connectée aux bras 10, 20 du triangle articulé 8 par l'intermédiaire dudit siège 30.

Par commodité de description, on considérera un plan, dit « plan de référence » P0, qui est normal au troisième axe de pivot Z32, et donc également normal au premier axe de pivot Z12 et au second axe de pivot Z22.

En projection dans ce plan de référence P0, les premier, second et troisième axes de pivot Z12, Z22, Z32 forment des points, qui correspondent aux trois sommets, ici distincts deux à deux, du triangle articulé 8.

Le segment qui s'étend du premier axe de pivot Z12 au second axe de pivot Z22 forme la base du triangle articulé 8, base qui est potentiellement mobile et/ou de longueur ajustable grâce aux premier et second chariots 11, 21.

Le troisième sommet qui correspond au troisième axe de pivot Z32 et donc au siège 30 forme la pointe du triangle articulé 8, qui se déplace, dans le plan de référence P0, pour accommoder les déplacements de la base et/ou pour accommoder les modifications de la longueur de la base qui sont induites par un mouvement relatif des premier et second chariots 11, 21 et qui provoquent la déformation du triangle articulé 8 autour des première, seconde et troisième liaisons pivots 12, 22, 32.

On associera de préférence au socle 2 un référentiel orthonormé, dit « référentiel absolu », illustré par un trièdre (X, Y, Z) sur les figures, qui définit des axes principaux X, Y, Z. Le plan de référence P0 correspond avantageusement au plan défini par le premier axe principal X, qui forme par convention l'axe des abscisses, et le second axe principal Y, qui forme par convention l'axe des ordonnées.

De façon préférentielle, les premier, second et troisième axes de pivot Z12, Z22, Z32, parallèles au troisième axe principal Z, sont orientés verticalement, ou au moins sensiblement verticalement, par exemple compris chacun dans un cône délimité entre -5 degrés et +5 degrés par rapport à la verticale.

De la sorte, le plan de référence P0, et donc le premier axe principal X ainsi que le second axe principal Y, est sensiblement horizontal, voire de préférence exactement horizontal.

Par convention, on pourra associer le troisième axe principal Z, ici vertical, du référentiel absolu, ou tout axe parallèle au troisième axe principal Z (et donc normal au plan de référence P0), à un axe de lacet.

De même, on pourra considérer par convention qu'un basculement autour du premier axe principal X, ici horizontal, ou autour de tout axe parallèle audit premier axe principal X, correspond à un mouvement de roulis, tandis qu'un basculement autour du second axe principal Y, ou autour de tout axe parallèle audit second axe principal Y, correspond à un mouvement de tangage.

On notera par ailleurs que, au sens de l'invention, la première liaison pivot 12 et la seconde liaison pivot 22 sont préférentiellement des liaisons pivots « exclusives », de type charnières, en ceci qu'elles sont agencées de manière à n'autoriser un degré de liberté en rotation qu'autour de leur axe de pivot Z12, Z22 respectif, ici donc un degré de liberté en rotation de lacet, tandis qu'elle suppriment (au moins) les deux autres degrés de liberté potentiels en rotation, à savoir le tangage et le roulis, entre les organes que ces liaisons pivot Z12, Z22 connectent l'un à l'autre.

Plus globalement, de préférence, le mécanisme porteur 3 autorise, grâce à la première liaison pivot 12, une rotation du premier bras 10 sur le premier chariot 11 en lacet autour du premier axe de pivot Z12, et uniquement autour dudit premier axe de pivot Z12, mais empêche le premier bras 10 de basculer en tangage ou en roulis par rapport au premier chariot 11.

De même, de préférence, le mécanisme porteur 3 autorise, grâce à la seconde liaison pivot 22, une rotation du second bras 20 sur le second chariot 21 en lacet autour du second axe de pivot Z22, et uniquement autour dudit second axe de pivot Z22, mais empêche le second bras 20 de basculer en tangage ou en roulis par rapport au second chariot 21.

De préférence, le mécanisme porteur 3 autorise, grâce à la troisième liaison pivot 32, une rotation du premier bras 10 par rapport au second bras 20 (et réciproquement, du second bras 20 par rapport au premier bras 10) en lacet autour du troisième axe de pivot Z32, mais empêche le premier bras 10 de basculer en tangage ou en roulis par rapport au second bras 20.

En supprimant les degrés de liberté en tangage et en roulis, on peut avantageusement conférer une bonne rigidité structurelle au mécanisme porteur 3, et donc réaliser un contrôle précis et facile du positionnement du siège 30 par rapport au socle 2.

De préférence, les première, seconde et troisième liaisons pivot 12, 22, 32 susmentionnées, et en particulier la troisième liaison pivot 32, pourront être réalisées par exemple au moyen de roulements à billes épaulés, ou bien encore, par souci de compacité et de légèreté, au moyen de roulements à aiguilles associés à des butées axiales à billes. De tels roulements permettent en effet avantageusement un montage qui pourra être axialement contraint par serrage, et donc sans jeu, ce qui garantira une excellente rigidité auxdites liaisons pivot.

En outre, les première, seconde et troisième liaisons pivot 12, 22, 32 seront de préférence libres, c'est-à-dire non intrinsèquement motorisées, de sorte à pouvoir s'adapter spontanément aux besoins de déformation du triangle articulé 8, quasiment sans opposer d'effort de résistance au pivotement.

Par ailleurs, on remarquera que, de façon particulièrement avantageuse, le triangle articulé 8 forme de préférence une structure autoporteuse, en ceci que les premier et second bras 10, 20, portés par leurs chariots 11, 21, suffisent pour porter le siège 30 ainsi que la plate-forme 4 par rapport au socle 2, et pour positionner ledit siège 30, et plus particulièrement le troisième axe de pivot Z32, de manière déterministe dans le référentiel absolu (X, Y, Z), sans qu'il soit nécessaire de recourir à un organe supplémentaire, tel que par exemple un ou plusieurs bras auxiliaires.

En effet, la position du troisième axe de pivot Z32, c'est-à-dire du troisième sommet du triangle articulé 8, dans le plan de référence P0 résulte de façon déterministe de la seule fixation de la position des deux autres sommets Z12, Z22, c'est-à-dire ici de la seule fixation d'un couple de paramètres que constituent la position (en abscisse) du premier chariot 11 et la position (en abscisse) du second chariot 21.

Le dispositif manipulateur 1 peut ainsi présenter une structure simple, compacte, et légère, permettant des déplacements du siège 30 précis et avec peu d'effet inertiel.

Chacun des premier et second bras 10, 20 sera avantageusement indéformable, en ceci qu'il sera dépourvu d'articulation intermédiaire entre d'une part la liaison pivot 12, respectivement 22, qui connecte le bras 10, 20 considéré à son chariot 11, respectivement 21, et d'autre part la troisième liaison pivot 32 du siège 30.

Ce caractère indéformable du premier bras 10, respectivement du second bras 20, en traction longitudinale (dans la direction longitudinale du bras 10, 20 considéré, entre les deux liaisons pivot que ledit bras relie l'une à l'autre), en compression longitudinale, en flexion, et en torsion, permet de maîtriser de façon simple, fiable et déterministe la structure du triangle articulé 8, et donc le positionnement du siège 30 par rapport au socle 2, chaque bras 10, 20 pouvant avantageusement être utilisé comme tirant (inextensible), comme poussoir (incompressible), et/ou comme flèche porteuse (par analogie avec la flèche d'une grue) pour porter le siège 3 et la plate-forme 4 en porte-à-faux par rapport au socle 2.

De préférence, la distance d1 qui sépare le premier axe de pivot Z12 du troisième axe de pivot Z32, dite « premier entraxe » d1 est invariante.

Tel que cela est visible sur la figure 4, ce premier entraxe d1 correspond en pratique à la longueur du premier côté du triangle articulé 8, et plus particulièrement à la longueur du premier bras 10, qui relie le premier chariot 11 au siège 30.

Ce premier entraxe d1 est de valeur non nulle, de sorte que le troisième axe de pivot Z32 soit déporté (et maintenu) par le premier bras 10 à distance d1 du premier axe de pivot Z12.

De même, la distance d2 qui sépare le second axe de pivot Z22 de ce même troisième axe de pivot Z32, dite « second entraxe » d2 est de préférence invariante.

Tel que cela est visible sur la figure 4, ce second entraxe d2 correspond en pratique à la longueur du second côté du triangle articulé 8, et plus particulièrement à la longueur du second bras 20, qui relie le second chariot 21 au siège 30.

Ce second entraxe d2 est de valeur non nulle, de sorte que le troisième axe de pivot Z32 soit déporté (et maintenu) par le second bras 20 à distance d2 du second axe de pivot Z22, lui-même non coaxial au premier axe de pivot Z12.

Avantageusement, l'invariance des premier et second entraxes d1, d2 permet d'optimiser la rigidité du dispositif manipulateur 1, et de simplifier le réglage puis la maîtrise des déplacements du mécanisme porteur 3.

En outre, avantageusement, le triangle articulé 8 peut adopter, dans le plan de référence P0, au moins une configuration non plate, et de préférence une pluralité de configurations fonctionnelles non plates, dans lesquelles aucun de ses sommets Z12, Z22, Z32 n'est superposé à un autre de ses sommets Z12, Z22, Z32, c'est-à-dire dans lesquelles les premier, second et troisième axe de pivot Z12, Z22, Z32, distincts deux à deux, sont distants deux à deux (c'est-à-dire deux à deux non coaxiaux), ce qui contribue à la rigidité et à la stabilité du mécanisme porteur 3.

Dans l'absolu, selon une variante de réalisation, on pourrait envisager, préalablement à l'utilisation du dispositif manipulateur 1, une possibilité de réglage, dit « réglage fixe », ou « réglage d'usine », de la longueur du premier entraxe d1 et/ou du second entraxe d2, par exemple au moyen d'un système à écrou/contre-écrou, de cales, ou tout autre moyen équivalent qui permettrait d'ajuster la longueur du bras 10, 20 concerné.

Une fois ce réglage effectué, celui-ci serait conservé, c'est-à-dire que les valeurs choisies du premier entraxe d1 et du second entraxe d2 seraient invariantes, pendant l'utilisation du dispositif manipulateur 1, et notamment lors des déplacements des premier et/ou second chariots 11, 21, dans la mesure où ces paramètres d'entraxe d1, d2 conditionnent les lois d'asservissement qui permettent de déplacer et positionner le siège 30 par rapport au socle 2.

Cependant, de façon particulièrement préférentielle, par simplicité de mise en oeuvre et pour éviter de créer des sources de dérive lors du fonctionnement du dispositif manipulateur 1, on utilisera une variante de réalisation au sein de laquelle le premier entraxe d1 et le second entraxe d2, et plus globalement la forme et la longueur de chacun des premier et second bras 10, 20, seront déterminés définitivement par construction, en usine, et définitivement invariants.

De préférence, au sein du triangle articulé 8, seule pourra être modifiée, ici dynamiquement, selon les besoins, la longueur du troisième côté, dite « entraxe de base » d0, qui correspond à la longueur de la base qui sépare le premier axe de pivot Z12 porté par le premier chariot 11 du second axe de pivot Z22 porté par le second chariot 21, tel que cela est notamment visible sur les figures 4 et 5.

De façon particulièrement préférentielle, le premier entraxe d1 et le second entraxe d2 seront égaux, de sorte que le triangle articulé 8 soit isocèle.

Un tel agencement symétrique simplifiera l'asservissement en position du siège 30, et favorisera un comportement dynamique relativement homogène du mécanisme porteur 3.

On notera également que, de façon préférentielle, afin de concilier rigidité, notamment rigidité à la flexion et à la torsion, et légèreté, le premier bras 10 et/ou le second bras 20 présenteront au moins une section droite CS (« Cross Section »), dont la dimension selon l'axe principal vertical Z, dite « hauteur », sera supérieure à la dimension selon l'axe horizontal correspondant, dite « largeur », tel que cela est notamment visible sur la figure 1.

Par section droite CS, on désigne, au sens usuel de la théorie des poutres, une section plane qui est normale à la ligne moyenne longitudinale L10, L20 selon laquelle le bras 10, 20 considéré relie le chariot 11, 21 au siège 30.

Par simplicité de réalisation, ladite section droite CS pourra être par exemple rectangulaire.

Par ailleurs, de préférence, afin d'allier légèreté et rigidité, le premier bras et/ou le second bras pourront présenter une structure composite, comprenant un coeur qui est réalisé dans une mousse à haute densité, par exemple une mousse polyuréthane haute densité, et qui est enveloppé dans une nappe à base de fibres de carbone.

Tout ou partie des organes nécessaires à la réalisation des liaisons pivot 12, 22, 32, tels que les logements pour les bagues de roulement, voire les bagues de roulement elles-mêmes si celles-ci sont intégrées aux bras 10, 20, pourront être alors formés par des inserts, qui seront réalisés dans un matériau métallique choisi pour sa rigidité, tel qu'un alliage de titane, et qui seront noyés dans la structure composite du bras 10, 20 considéré.

En référence à la section droite CS susmentionnée, la nappe de fibre de carbone délimitera tout le périmètre de ladite section droite CS, tandis que la mousse haute densité remplira l'intérieur, de préférence tout l'intérieur, de ladite section droite CS.

Selon l'invention, le triangle articulé 8 comprend également, tel que cela est visible notamment sur les figures 1 et 4, un module d'asservissement 50 qui pilote d'une part un premier moteur 51, propre au premier chariot 11, et d'autre part un second moteur 52, propre au second chariot 21 et distinct du premier moteur 51, de sorte à pouvoir asservir distinctement les mouvements respectifs de translation du premier et du second chariot 11, 21 par rapport au socle 2, afin de pouvoir modifier la position du siège 30 par rapport au socle 2.

Le premier moteur 51 est donc agencé pour entraîner le premier chariot 11 en translation sur le socle 2, selon une trajectoire guidée et captive, qui peut être de préférence matérialisée par un premier organe de guidage 53, tel qu'un rail de guidage 53.

De même, le second moteur 52 est agencé pour entraîner le second chariot 21 en translation sur le socle 2, selon une trajectoire guidée et captive, qui peut être de préférence matérialisée par un second organe de guidage 54, tel qu'un rail de guidage 54.

De préférence, le premier chariot 11 est guidé en translation rectiligne par rapport au socle 2 selon un premier axe de guidage X11 qui est perpendiculaire au premier axe de pivot Z12 tandis que le second chariot 21 est guidé en translation rectiligne par rapport au socle 2 selon un second axe de guidage X21 qui est parallèle au premier axe de guidage X11.

Un tel agencement est avantageusement simple et compact, et permet un contrôle précis des chariots 11, 21 et donc un contrôle précis du positionnement du siège 30.

Le premier axe de guidage X11 et le second axe de guidage X21 sont ici parallèles au premier axe horizontal principal X (axe des abscisses).

On peut ainsi simplifier l'asservissement du positionnement du siège 30, et le rendre particulièrement précis.

De préférence, le guidage du premier chariot 11 selon le premier axe géométrique de guidage X11 est assuré structurellement par le premier organe de guidage 53, à savoir le premier rail de guidage 53 susmentionné, qui s'étend selon une direction colinéaire audit premier axe géométrique de guidage X11. Il en va de préférence de même pour le second chariot 21 dont le guidage selon le second axe géométrique de guidage X21 est assuré structurellement par le second organe de guidage 54 qui s'étend selon une direction colinéaire audit second axe géométrique de guidage X21. En outre, le premier organe de guidage 53 et le second organe de guidage 54 sont de préférence avantageusement agencés pour empêcher le basculement en roulis (autour de l'axe principal X, et plus particulièrement autour des axes de guidage X11, X21) et le basculement en tangage (autour de l'axe principal Y), du premier chariot 11, et respectivement le basculement en roulis et en tangage du second chariot 21, par rapport au socle 2.

Cet effet anti-basculement peut être obtenu en conférant à chaque chariot 11, 21 une portée de guidage suffisamment longue sur chacun des premier et troisième axes principaux X et Z, par exemple en utilisant pour chaque chariot 11, 21 plusieurs patins de guidage, du genre patins à recirculation de billes, répartis selon lesdits axes principaux X et Z, et/ou en utilisant, tel que cela est visible sur la figure 1, un organe de guidage 53, 54 de type glissière à rainure en « T » ou à queue d'aronde.

De façon particulièrement préférentielle, le second axe de guidage X21 est coaxial audit premier axe de guidage X11.

Avantageusement, le premier et le second chariot 11, 21 peuvent ainsi partager un même axe de guidage X11, X21 commun, et donc être montés et guidés sur un seul et même organe de guidage 53, 54.

Ceci permet notamment de réduire le coût de fabrication du dispositif manipulateur 1, et de simplifier la construction et le réglage du mécanisme porteur 3.

En particulier, les rails de guidage 53, 54 susmentionnés peuvent ainsi être confondus en un seul et même rail de guidage 53, 54 partagé, qui pourra éventuellement être réalisé d'un seul tenant au moins sur la longueur cumulativement couverte par les courses des premier et second chariot 11, 21, tel que cela est illustré sur les figures 1, 2, 4 et 5.

Le premier moteur 51 et le premier moteur 52 sont de préférence des moteurs électriques, et de façon particulièrement préférentielle des moteurs électriques linéaires, qui procurent une grande précision et une bonne rigidité lors du maintien de chaque chariot 11, 21 dans la position souhaitée le long de l'axe de guidage X11, X21.

De préférence, le premier chariot 11 et le second chariot 21 peuvent former respectivement, tel que cela est visible sur les figures 1, 4 et 5 un premier bloc de bobine 51A d'un premier moteur 51 linéaire et un second bloc de bobine 52A d'un second moteur 52 linéaire, distinct du premier moteur 51 linéaire.

De façon particulièrement préférentielle, les premier et second blocs de bobine 51A, 52A desdits premier et second moteurs 51, 52 linéaires peuvent alors être avantageusement engagés à coulissement sur un même barreau magnétique 55 commun, qui est fixé sur le socle 2 et qui matérialise, tel que cela a été envisagé plus haut, un axe de guidage X11, X21 partagé par le premier chariot 11 et le second chariot 21, tel que cela est notamment visible sur les figures 1, 2, 4 et 5.

Ici encore, un tel agencement permettra d'obtenir un dispositif manipulateur 1 à la fois simple, fiable et compact.

Le barreau magnétique 55 pourra être de forme cylindrique de base circulaire, et de génératrice parallèle à l'axe de guidage X11, X21.

Ledit barreau magnétique 55 sera de préférence garni d'aimants permanents.

On notera que, tandis que, généralement, les moteurs linéaires utilisent le bloc de bobine comme stator et le barreau magnétique comme noyau mobile, le dispositif manipulateur 1 selon l'invention préfère avantageusement utiliser le barreau magnétique 55 en tant que stator, fixé sur le socle 2, et commun aux premier et second moteurs 51, 52, tandis que les blocs de bobine 51A, 52A sont utilisés comme organes mobiles.

Les caractéristiques des deux blocs bobine 51A, 52A étant de préférence identiques, et les caractéristiques du barreau magnétique 55 étant de préférence identiques sur toute la longueur continue dudit barreau magnétique 55 susceptible d'être parcourue par le premier et/ou par le second bloc de bobine 51A, 52A, on pourra ainsi avantageusement bénéficier d'une référence de déplacement et d'un pas de déplacement (correspondant au plus petit incrément de déplacement possible entre deux positions d'un bloc de bobine, et donc à la plus fine résolution de positionnement dudit bloc de bobine) qui seront identiques pour les deux chariots 11, 21, ce qui simplifiera l'asservissement.

En outre, une telle solution consistant à utiliser le barreau magnétique 55 comme stator commun aux deux chariots 11, 21 permet de concilier de façon simple, tout en réalisant une économie de composants mécaniques, un guidage partagé et un asservissement indépendant de chacun des premier et second moteur 51, 52, puisque l'alimentation électrique de chacun des blocs de bobine 51A et 52A enfilés sur le barreau magnétique 55 peut être activée et pilotée individuellement, séparément de l'autre bloc de bobine 52A, 51A, par le module d'asservissement 50.

En choisissant le signe et la norme (valeur absolue) du déplacement imparti individuellement à chaque chariot 11, 21 le long de l'axe de guidage X11, X21, ici donc de préférence en abscisse, on pourra obtenir toute trajectoire résultante librement choisie du siège 30 dans le repère cartésien associé au plan de référence P0.

Ces signes et normes de déplacements sont schématisés par des vecteurs sur les exemples des figures 6A à 6D.

En particulier, on pourra ainsi notamment imposer au premier chariot 11 et au second chariot 21 des déplacements:
- de même norme, mais de signes opposés (figures 6A et 6B), ce qui aura pour effet de déplacer le siège 30 purement selon le second axe principal Y, c'est-à-dire en ordonnées, mais sans modifier la position dudit siège 30 selon l'axe principal X des abscisses, qui correspond à l'axe de guidage X11. Selon que l'on rapprochera (figure 6A) ou que l'on éloignera (figure 6B) les chariots 11, 21 l'un de l'autre, on réduira ou au contraire on augmentera l'entraxe de base d0, et par conséquent on augmentera ou au contraire on réduira la hauteur du triangle articulé 8, ce qui aura pour effet d'éloigner ou au contraire de rapprocher le siège 30 de l'axe de guidage X11 ;
- de même norme et de même signe, ce qui permettra d'obtenir une translation du siège 30 purement parallèlement à l'axe de guidage X11 et donc parallèlement à l'axe principal X (figure 6C), c'est-à-dire ici un déplacement en abscisse ;
- de même signe mais de normes différentes, ce qui permettra de générer simultanément d'une part un déplacement relatif entre les premier et second chariots 11, 21, déplacement relatif qui crée une première composante de déplacement du siège 30 dans le sens de la hauteur du triangle, selon le second axe principal Y, en éloignement ou en rapprochement de l'axe de guidage X11, c'est-à-dire ici une première composante de déplacement en ordonnées, et d'autre part un mouvement d'ensemble desdits chariots 11, 21 dans la direction définie par le signe choisi, qui crée une seconde composante de déplacement du siège 30, parallèlement à l'axe de guidage X11 et donc parallèlement à l'axe principal X, c'est-à-dire ici une seconde composante de déplacement en abscisse, lesdites première et seconde composantes se combinant pour produire un déplacement résultant du siège 30 qui peut ainsi suivre n'importe quelle trajectoire oblique prédéfinie, courbe ou rectiligne, dans le plan de référence P0.

Les vitesses (en particulier leurs normes et signes) respectives des premier et second chariots 11, 21 le long de leur axe de guidage X11, X21, et le cas échéant les accélérations respectives desdits chariots 11, 21 le long dudit axe de guidage X11, X21, peuvent être asservies en temps réel par le module d'asservissement 50.

On notera en outre que, selon une caractéristique préférentielle, le module d'asservissement 50 peut contenir au moins une loi de pilotage qui est conçue pour piloter une accélération du siège 30, ladite accélération étant considérée dans un plan de référence P0 qui est normal aux premier, second et troisième axes de pivot Z12, Z22, Z32, et en un point dit « centre de siège » qui correspond à l'intersection du troisième axe de pivot Z32 avec ledit plan de référence P0.

Selon une possibilité de mise en oeuvre, la loi de pilotage pourrait définir l'accélération sous forme d'une valeur constante, en ceci qu'elle ne serait pas une fonction variable du temps.

Cependant, de façon préférentielle, ladite loi de pilotage permettra de définir l'accélération du siège 30 à partir d'une expression de degré N par rapport au temps, avec N entier égal ou supérieur à 1, de sorte que ladite expression est au moins du premier degré (N=1) par rapport au temps (t), de préférence au moins du second degré (N=2) par rapport au temps (t²), voire du troisième degré par rapport au temps (t³) ou même d'un degré N supérieur à trois (N>3).

Ainsi, on pourrait même envisager une loi de pilotage d'accélération du siège 30 sous forme d'une expression d'un degré plus élevé par rapport au temps, par exemple du quatrième degré (N=4), du cinquième degré (N=5) voire du sixième degré (N=6) par rapport au temps.

Ladite loi de pilotage pourra notamment prendre la forme d'un polynôme du degré N souhaité par rapport à la variable « temps ».

Avantageusement, en faisant varier l'accélération du siège 30 en fonction de la variable « temps » selon une loi de pilotage qui présente un degré suffisamment élevé par rapport à ladite variable « temps », on pourra gérer efficacement l'évolution de la dérivée première de l'accélération par rapport au temps, et par conséquent maîtriser, voire éliminer, le vecteur d'à-coup (« jerk »). En effet, si la loi d'accélération est de degré N≥1 par rapport au temps, la valeur de dérivée première sera au moins une constante (si N=1), voire une fonction variable du temps (si N>1).

On pourra ainsi mettre en oeuvre des accélérations très élevées, sans dommage pour la structure du mécanisme porteur 3 ni dégradation des performances en précision. La cadence de fonctionnement du dispositif manipulateur 1 s'en verra considérablement améliorée.

La loi de pilotage s'appliquera au moins à chacun des premier et second chariots 11, 21 dans la mesure nécessaire pour obtenir, au niveau du siège 30, la valeur d'accélération souhaitée, et plus particulièrement la valeur correspondante de la composante d'accélération en abscisses X et la valeur correspondante de la composante d'accélération en ordonnées Y, et faire varier ladite accélération en fonction des besoins.

On notera que, par simple intégration, si la loi d'asservissement en accélération est une expression de degré N par rapport au temps, la loi d'asservissement en vitesse correspondante sera de degré N+1 par rapport au temps, et la loi d'asservissement en position correspondante de degré N+2 par rapport au temps.

Selon l'invention, le mécanisme porteur 3 qui forme le triangle articulé 8 comprend par ailleurs une interface d'orientation en lacet 40 qui comprend une quatrième liaison pivot 42, dite « pivot différentiel de lacet » 42, selon laquelle la plate-forme 4 s'articule sur le siège 30, à la fois relativement au premier bras 10 et relativement au second bras 20, selon un mouvement de rotation en lacet R42 dit « mouvement différentiel en lacet » R42, autour d'un axe dit « axe différentiel de lacet » Z42 qui est coaxial au troisième axe de pivot Z32, tel que cela est notamment visible sur les figures 1, 2, 3 et 8 à 10.

Avantageusement, ladite interface d'orientation en lacet 40 permet de modifier l'orientation angulaire, dite « orientation en lacet », de la plate-forme 4 par rapport à chacun des premier et second bras 10, 20, autour d'un même centre de rotation en lacet qui est localisé sur le troisième axe de pivot Z32, à la croisée des premier et second bras 10, 20.

Ainsi, avantageusement, tandis que les premier et second bras 10, 20 et leurs chariots 11, 21 respectifs permettent de choisir et de modifier la position cartésienne du siège 30, et donc la position cartésienne de la plate-forme 4 et de l'objet à manipuler 5, dans le repère cartésien (X, Y, Z) attaché au plan de référence P0 et au socle 2, c'est-à-dire de choisir et de modifier la position en abscisse, selon le premier axe principal X, et la position en ordonnée, selon le second axe principal Y, du siège 30 et donc de l'objet à manipuler 5, l'interface d'orientation en lacet 40 permet quant à elle de définir librement, et le cas échéant de faire varier, l'orientation en lacet de ladite plate-forme 4, et donc l'orientation en lacet de l'objet à manipuler 5, dans ledit plan de référence P0, par rapport à un axe différentiel de lacet Z42 qui est parallèle au troisième axe principal Z et qui coïncide avec cette position cartésienne donnée du siège 30 à tout instant considéré.

En d'autres termes, l'interface d'orientation en lacet 40 permet avantageusement de dissocier le choix de la position cartésienne du siège 30, et donc le positionnement cartésien, en abscisses X et en ordonnées Y, de la plate-forme 4, et par conséquent le positionnement cartésien de l'objet à manipuler 5, par rapport au socle 2 d'une part, du réglage de l'orientation angulaire en lacet de ladite plate-forme 4, et donc du réglage de l'orientation en lacet de l'objet à manipuler 5, par rapport au socle 2, d'autre part.

En effet, tandis que le positionnement cartésien du siège 30 et donc le positionnement cartésien de la plate-forme 4, et plus particulièrement la modification de la position cartésienne du siège 30 et donc la modification de la position cartésienne de la plate-forme 4, notamment en ordonnée Y, peuvent avoir, voire ont nécessairement, une incidence sur l'orientation des deux bras 10, 20 du triangle articulé 8, l'orientation en lacet de la plate-forme 4, en revanche, n'a plus de lien de dépendance forcée avec l'orientation de l'un quelconque des premier bras 10 et second bras 20, grâce à la dé-corrélation que procure l'interface d'orientation en lacet 40.

Avantageusement, on pourra donc piloter séparément une consigne de position cartésienne, ou de déplacement cartésien, en abscisse X et/ou en ordonnée Y dans le plan de référence P0, et une consigne d'orientation en lacet, autour d'un axe différentiel de lacet normal audit plan de référence P0, pour définir à tout instant la configuration (position d'une part, et orientation d'autre part) de la plate-forme 4 dans l'espace, par rapport au socle 2.

De préférence, l'interface d'orientation en lacet 40 comprend un moteur d'orientation en lacet 43, qui est piloté par le module d'asservissement 50 et qui est agencé de manière à, lorsque ledit moteur d'orientation en lacet 43 est activé, entraîner la plate-forme 4 selon le mouvement différentiel en lacet R42, autour de l'axe différentiel de lacet Z42, par rapport aux premier et second bras 10, 20.

On notera que ledit moteur d'orientation en lacet 43 peut de préférence être embarqué sur la plate-forme 4, tel que cela est illustré sur les figures 1 à 5.

Ledit moteur d'orientation en lacet 43 est de préférence couplé à un pignon 46 qui engrène sur une portion de couronne dentée 47 en prise sur l'un et/ou l'autre des premier et second bras 10, 20.

La motorisation permet avantageusement d'améliorer la précision du pilotage en lacet de la plate-forme 4, et d'automatiser ce pilotage en lacet, de manière à pouvoir suivre toute trajectoire librement choisie. En particulier, on pourra asservir le pilotage en lacet de la plate-forme 4 de manière à pouvoir assurer à tout moment une orientation de l'objet à manipuler 5 qui soit tangente à la surface du support d'assemblage 7, considérée en projection dans le plan de référence P0, tel que cela est visible sur la figure 10.

Le moteur d'orientation en lacet 43 est de préférence un moteur électrique.

L'arbre du moteur d'orientation en lacet 43, de même que l'axe central Z46 du pignon 46, et l'axe central Z47 de la portion de couronne dentée 47, sont de préférence parallèles entre eux, et préférentiellement parallèles au troisième axe de pivot Z32, c'est-à-dire ici verticaux.

Plus préférentiellement, l'axe central Z47 de la portion de couronne dentée 47 sera coaxial au troisième axe de pivot Z32, et donc à l'axe différentiel de lacet Z42, c'est-à-dire que la portion de couronne dentée 47 sera centrée sur le troisième axe de pivot Z32.

On notera que le moteur d'orientation en lacet 43 est de préférence majoritairement situé, voire de préférence entièrement situé, du côté de la base du triangle articulé 8 par rapport au troisième axe de pivot Z32, c'est-à-dire dans un espace compris entre le troisième axe de pivot Z32 et la portion du support 2 qui matérialise l'axe de guidage X11, X21 des chariots 11, 21, et plus particulièrement entre le troisième axe de pivot Z32 et les premier et second rails de guidage 53, 54.

Avantageusement, ceci permet de rapprocher ledit moteur d'orientation en lacet 43 de l'axe de guidage X11, X21, et le cas échéant des rails de guidage 53, 54 correspondants, et plus globalement permet de placer à proximité de l'axe de guidage X11, X21, et plus précisément à proximité des organes de guidage 53, 54 qui matérialisent ledit axe de guidage, les éléments mobiles qui sont embarqués par le mécanisme porteur 3, ce qui a pour effet de minimiser le bras de levier entre le centre de gravité du moteur d'orientation en lacet 43 et l'axe de guidage X11, X21, et permet donc de réduire les effets inertiels sur le mécanisme porteur 3, ainsi que les effets liés à l'agencement en porte-à-faux des bras 10, 20, de la plate-forme 4 et du moteur d'orientation en lacet 43 par rapport à l'axe de guidage X11, X21, porte-à-faux qui tend à créer, vis-à-vis des organes de guidage 53, 54, un moment fléchissant en roulis, du fait de la gravité.

Selon une caractéristique préférentielle qui peut constituer une invention à part entière, l'interface d'orientation en lacet 40 comprend un système compensateur 44 qui est agencé pour coopérer avec le pivot différentiel de lacet 42 de manière d'une part à conférer à la plate-forme 4, dans un référentiel attaché au socle 2, dit « référentiel absolu » (X, Y, Z), une orientation angulaire déterminée en lacet autour de l'axe différentiel de lacet Z42 coaxial au troisième axe de pivot Z32, dite « orientation absolue de référence en lacet », notée ici A4_ref notamment sur les figures 7A, 7B, 8, 9, 10, et d'autre part à pouvoir maintenir automatiquement la plate-forme 4 dans cette orientation absolue de référence en lacet A4_ref_par rapport au socle 2, dans ledit référentiel absolu (X, Y, Z) attaché au socle 2, lors de déplacements du premier et/ou du second chariot 11, 21 qui modifient la distance, dite « entraxe de base » d0, qui sépare le premier axe de pivot Z12 du second axe de pivot Z22.

L'orientation absolue en lacet de la plate-forme 4 pourra plus particulièrement être considérée comme l'angle de lacet formé, dans le plan de référence P0, entre un élément quelconque de ladite plate-forme 4, fixe par rapport à ladite plate-forme 4, et l'axe de guidage X11, X21.

En pratique, dans le plan de référence P0, le système compensateur 44 permet, lorsque l'on modifie la position cartésienne (en abscisse X et/ou en ordonnée Y) du siège 30, position cartésienne qui est ici repérée par le troisième axe de pivot Z32, de déplacer la plate-forme 4 par rapports aux premier et second bras 10, 20 en lacet sur ledit siège 30, via l'interface d'orientation en lacet 40, d'une valeur angulaire suffisante pour compenser le basculement en lacet des bras 10, 20. L'orientation résultante de la plate-forme 4 en lacet, considérée dans le référentiel absolu attaché au socle 2, reste donc inchangée, alors même que la position cartésienne du siège 30, et plus particulièrement la distance du siège 30 et de son troisième axe de pivot Z32 par rapport à l'axe de guidage X11, X21, a été modifiée.

Selon une possible variante de réalisation, un tel système compensateur 44 peut utiliser, tel que cela est illustré sur les figures 7A et 7B, un mécanisme à parallélogramme articulé 60 reliant, via une biellette 61, la plate-forme 4 à un levier de réglage 45 qui est captif d'un chariot, ici le second chariot 21, et dont l'inclinaison en lacet par rapport à l'axe de guidage X21 dudit chariot 21, ici l'axe de guidage partagé X11, X21, est fixée de manière à être invariante, et dépend, dans le plan de référence P0, de la valeur voulue pour l'orientation absolue de référence en lacet A4_ref.

D'autres variantes de système compensateur 44 sont toutefois envisageables, par exemple une variante qui utilise le pignon 46 et la couronne dentée 47 mentionnés plus haut, tel que cela sera détaillé ci-après.

Par ailleurs, de préférence, le module d'asservissement 50 peut prendre pour référence, pour définir une origine à partir de laquelle ledit module d'asservissement 50 pilote le moteur d'orientation en lacet 43 et quantifie les mouvements différentiels en lacet R42 de la plate-forme 4, tels que ces mouvements différentiels en lacet R42 sont générés par l'activation dudit moteur d'orientation en lacet 43, la configuration que présente ledit moteur d'orientation en lacet 43 lorsque la plate-forme 4 est orientée conformément à l'orientation absolue de référence en lacet A4_ref choisie.

En d'autres termes, le module d'asservissement peut avantageusement faire coïncider le zéro « relatif » du moteur d'orientation en lacet 43, qui, lorsqu'il est activé et entre ainsi en mouvement, génère un déplacement relatif de la plate-forme 4 par rapport au siège 30, c'est-à-dire typiquement faire coïncider la « position zéro » constituant l'origine par rapport à laquelle on mesure l'amplitude de rotation de l'arbre du moteur d'orientation en lacet 43 par rapport au stator dudit moteur 43, avec le zéro « absolu », qui correspond à l'orientation absolue de référence en lacet A4_ref choisie, invariante, et par rapport auquel on peut exprimer, dans le référentiel absolu attaché au socle 2, la mesure absolue d'orientation en lacet de la plate-forme 4.

Une telle superposition des origines facilite l'étalonnage et l'asservissement en lacet du mécanisme porteur 3 et de la plate-forme 4.

En effet, la valeur de déplacement qui sera mesurée au niveau du moteur d'orientation en lacet 43, en référence à cette origine, par exemple au moyen d'un capteur de position angulaire intégré à l'arbre dudit moteur d'orientation en lacet 43 et étalonné sur cette origine, tel qu'un capteur de type resolver, indiquera ainsi directement l'orientation angulaire absolue en lacet effectivement prise par la plate-forme 4, dans le repère absolu attaché au socle 2.

En outre, le choix de l'orientation absolue de référence en lacet A4_ref étant libre pour l'utilisateur, il est ainsi possible d'opérer aisément, autant que nécessaire, préalablement à un cycle de déplacement du siège 30, un recalage d'origine (une redéfinition d'origine) pour l'asservissement en lacet de la plate-forme 4. On peut ainsi choisir, pour chaque type de trajectoire, les conditions les plus appropriées qui simplifient le plus possible les lois d'asservissement.

Selon un agencement préférentiel qui peut constituer une invention à part entière, et qui est présent sur les figures 1 à 5, l'interface d'orientation en lacet 40 comprend d'une part une portion de couronne dentée circulaire 47, qui est centrée sur le troisième axe de pivot Z32 et qui relie le premier bras 10 au second bras 20 en étant fixée en position invariante sur le premier bras 10 et guidée en coulissement sur le second bras 20 à une distance radiale fixe du troisième axe de pivot Z32, de sorte à pouvoir accommoder les déplacements en écartement angulaire ou en rapprochement angulaire des premier et second bras 10, 20 induits par les déplacements du premier chariot 11 et/ou du second chariot 21, et d'autre part un pignon 46, qui engrène sur ladite portion de couronne dentée 47, et qui est couplé à un moteur d'orientation en lacet 43, lui-même embarqué sur la plate-forme 4, de telle sorte que l'on peut piloter sélectivement l'interface d'orientation en lacet 40 en choisissant parmi une pluralité de régimes de fonctionnement distincts, comprenant :
- un premier régime de fonctionnement, dit « régime de compensation simple », dans lequel le moteur d'orientation en lacet 43 est activé dans une mesure juste nécessaire et suffisante pour que l'engrènement roulant du pignon 46 sur la portion de couronne dentée 47 assure un maintien de l'orientation en lacet absolue de ladite plate-forme 4 par rapport au socle 2, en réalisant ainsi une compensation des mouvements des premier et second bras 10, 20 qui sont induits par le déplacement de l'un et/ou l'autre des premier et second chariots 11, 21 ;
- un second régime de fonctionnement, dit « régime de réorientation active », dans lequel le moteur d'orientation en lacet 43 est activé de manière à entraîner le pignon 46 dans une mesure telle que l'engrènement roulant du pignon 46 sur la portion de couronne dentée 47 provoque une modification active de l'orientation absolue en lacet de la plate-forme 4 par rapport au socle 2.

On notera que, avantageusement, le moteur d'orientation en lacet 43, le pignon 46 et la portion de couronne dentée 47 peuvent avantageusement former un sous-ensemble multifonctions, capable d'assurer aussi bien la fonction de système compensateur 44, ici par compensation simple, que la fonction d'asservissement et de modification active de l'orientation en lacet de la plate-forme 4 par rapport au socle 2.

Avantageusement, le régime de compensation simple permet, de conserver une orientation en lacet absolue de la plate-forme 4 constante, alors même que l'on modifie la position de l'un des chariots ou des deux chariots 11, 21 et par conséquent que l'on provoque une reconfiguration de la structure géométrique du triangle articulé 8, avec une réorientation en lacet des premier et second bras 10, 20 dans le référentiel absolu (X, Y, Z) associé au socle 2.

En pratique, on pourra ainsi notamment utiliser le régime de compensation simple pour conserver une orientation absolue en lacet de la plate-forme 4 qui soit constante et égale à l'orientation absolue de référence en lacet A_ref choisie. On pourra ainsi, comme cela a été dit plus haut, faire coïncider avec l'orientation en lacet du référentiel absolu (X, Y, Z) l'origine par rapport à laquelle on choisira de piloter les mouvements ultérieurs du moteur d'orientation en lacet 43 lorsque l'on souhaitera modifier activement, et le cas échéant dynamiquement, conformément au régime de réorientation active, l'orientation en lacet de la plate-forme 4 dans le repère absolu, pour conférer à ladite plate-forme 4 une orientation en lacet différente de l'orientation de référence A4_ref initiale choisie.

Lorsqu'il est activé, le moteur d'orientation en lacet 43 génère une rotation de son arbre par rapport au stator dudit moteur d'orientation en lacet 43, lui-même solidaire de la plate-forme 4, et donc génère un mouvement de rotation du pignon 46 sur l'axe central Z46 dudit pignon 46, par rapport au stator du moteur d'orientation en lacet 43.

Le pignon 46 roule alors, par engrènement, sur la portion de couronne dentée 47, ce qui modifie l'orientation en lacet de la plate-forme 4 par rapport à ladite portion de couronne dentée 47.

La fixation de la portion de couronne dentée 47 sur le premier bras 10 pourra être opérée par une embase vissée 48, tandis que le coulissement captif et guidé de ladite portion de couronne dentée 47 par rapport au second bras 20 pourra être réalisé au moyen d'une glissière 49, par exemple d'une glissière à billes, au sein de laquelle, tel que cela est visible sur les figures 1 ou 3, un rail courbe 49A coopère avec un ou des patins à billes 49B, de forme conjuguée, fixé(s) sur le second bras 20.

Si l'on déplace le ou les chariots 11, 21 de sorte à modifier l'entraxe de base d0, et donc la position cartésienne du siège 30 dans le référentiel absolu (X, Y, Z), alors on modifie en conséquence l'ouverture angulaire entre le premier bras 10 et le second bras 20 (à la manière dont, par analogie, on écarterait ou l'on rapprocherait l'une de l'autre les deux branches d'un compas), ce qui a pour effet de faire coulisser la couronne dentée 47, entraînée par le premier bras 10, d'une certaine longueur d'arc dans la glissière 49 fixée au second bras 20.

Si l'on exécute, de préférence de façon synchrone au déplacement des chariots 11, 21, une activation du moteur d'orientation en lacet 43 qui provoque la mise en rotation du pignon 46 sur une amplitude suffisante pour que ledit pignon 46 parcoure, en roulant sur la couronne dentée 47, une longueur d'arc de couronne dentée 47 égale à celle dont ladite couronne dentée 47 s'est déplacée par rapport à la glissière 49, alors, dans la mesure où la rotation en lacet de la couronne dentée 47 et la rotation de la plate-forme 4 sur le siège 30 s'effectuent toutes les deux autour d'un même centre géométrique de rotation, ici correspondant à l'axe différentiel de lacet Z42 qui se confond avec le troisième axe de pivot Z32, on obtient en définitive un retour (si la rotation du pignon 46 intervient après le déplacement des chariots 11, 21, ou intervient en retard de phase par rapport audit déplacement des chariots 11, 21), ou le cas échéant un maintien dynamique (si la rotation du pignon 46 est synchronisée avec le déplacement des chariots 11, 21), de la plate-forme 4 dans son orientation absolue en lacet d'origine, ici de préférence l'orientation absolue de référence en lacet 4A_ref, dans le référentiel absolu (X, Y, Z).

A l'inverse, si l'activation du moteur d'orientation en lacet 43, et la mise en rotation correspondante du pignon 46 sur (et le long de) la couronne dentée 47, survient en-dehors de tout déplacement des chariots 11, 21, alors que la plate-forme 4 présente une orientation en lacet qui correspond avec son orientation absolue de référence A4_réf, ou bien si, lors d'un déplacement des chariots 11, 21 ou consécutivement à un tel déplacement des chariots 11, 21, l'amplitude du déplacement du pignon 46 le long de la couronne dentée 47 diffère de la longueur d'arc dont la couronne dentée 47 s'est déplacée par rapport à la glissière 49, alors on observe cette fois une modification de l'orientation angulaire absolue en lacet de la plate-forme 4 par rapport à l'orientation absolue en lacet de référence A4_ref, d'une valeur de déviation en lacet notée A4_diff sur la figure 10, qui est fonction de l'écart entre la longueur d'arc parcourue par la couronne dentée 47 et la longueur d'arc rattrapée par le pignon 46 le long de ladite couronne dentée 47.

Les figures 8, 9 et 10 permettent de mieux comprendre les phénomènes de compensation simple, puis de réorientation active, en dissociant fictivement les phases correspondantes.

Initialement, la plate-forme 4 est orientée selon l'orientation absolue de référence A4_ref, tel que cela est illustré sur la figure 8.

Selon une première phase, si l'on augmente l'entraxe de base d0 en éloignant le second chariot 21 du premier chariot 11, comme illustré sur la figure 9, on augmente l'ouverture angulaire entre les premier et second bras 10, 20, ce qui augmente la longueur d'arc de la portion de couronne dentée 47 comprise entre ces bras 10, 20.

Puisque le premier bras 10 s'ouvre (ici en sens horaire sur la figure 9) par rapport au troisième axe de pivot Z32, le point de la couronne dentée 47 qui engrenait initialement avec le pignon 46, et dont la distance audit premier bras 10 est fixée du fait que la portion de couronne dentée 47 est attachée audit premier bras 10, se déplace donc de la même manière. En l'absence d'activation, le moteur d'orientation en lacet 43 exerce un effet de frein-moteur qui s'oppose à la rotation de l'arbre dudit moteur, et donc qui s'oppose à la rotation du pignon 46, par rapport au stator dudit moteur fixé à la plate-forme 4. De la sorte, tout se passe comme si le pignon 46 était alors temporairement fixé en position invariante d'une part sur la plate-forme 4, par l'intermédiaire du moteur d'orientation en lacet 43 inactif qui bloque temporairement la rotation du pignon 46 par rapport au stator dudit moteur et donc par rapport à la plate-forme 4, et d'autre part avec la couronne dentée 47 sur laquelle engrène la denture du pignon 46. Tout se passe donc comme si la couronne dentée 47 "tirait" sur le pignon 46, en basculant ledit pignon 46 et la plate-forme 4 à sa suite.

Si l'on note T47 la tangente à la couronne dentée 47 au point de contact avec le pignon 46, dans le plan de référence P0, on constate que le basculement du premier bras 10 et donc la réorientation en lacet de la couronne dentée 47 qui en résulte, a pour effet de faire basculer de même en lacet ladite tangente T47, tel que cela est illustré en pointillés sur la figure 9.

Lors d'une seconde phase, qui peut en pratique s'opérer simultanément ou postérieurement au mouvement des chariots 11, 21, on active le moteur d'orientation en lacet 43 pour provoquer un roulement du pignon 46 sur la couronne dentée 47. Ce roulement couvre ici la même longueur d'arc que celle correspondant au décalage opéré par la couronne dentée 47 par rapport au second bras 20 lors de la première phase. Le résultat de la combinaison de ces phases est donc une compensation exacte du roulement de la couronne dentée 47 par le roulement du pignon 46.

En définitive, le basculement en lacet du premier bras 10, du siège 30 et de la couronne dentée 47 en lacet par rapport au socle 2 est donc compensé par un basculement équivalent en lacet de la plate-forme 4 par rapport au siège 30, ce qui permet de conserver l'orientation absolue en lacet de ladite plate-forme 4 lors du déplacement du siège 30, tel que cela est visible en trait plein sur la figure 9. Ici, la plate-forme restera donc en définitive orientée selon l'orientation absolue de référence en lacet A4_ref choisie.

Le cas échéant, lors d'une troisième phase, on pourra activer le moteur d'orientation en lacet 43 afin que le pignon décrive, sur la couronne dentée 47, un complément de déplacement, de sorte à conférer finalement à la plate-forme 4 une orientation absolue en lacet qui est distincte de l'orientation absolue de référence en lacet A4_ref, et qui correspond donc à une réorientation angulaire active d'une valeur A_diff par rapport à ladite orientation de référence, comme cela est illustré sur la figure 10.

Cette réorientation active en lacet permettra notamment de positionner l'objet à manipuler 5, et ici plus particulièrement un galet presseur 101, de façon tangente, dans le plan de référence P0, à la surface de réception incurvée, ici convexe, et par exemple toroïdale, du support d'assemblage 7.

On notera par ailleurs que la portion de couronne dentée 47, le pignon 46, et au moins une partie de la plate-forme 4 qui forme un balancier qui joint l'axe différentiel de lacet Z42 à l'axe central Z46 du pignon 46, sont de préférence situés du côté de la base du triangle articulé 8, c'est-à-dire du côté de l'axe de guidage X11, X21 ets des organes de guidage 53, 54 correspondants, par rapport au troisième axe de pivot Z32, c'est-à-dire sont compris entre ledit troisième axe de pivot Z32 et l'axe de guidage X11, X21, et ce afin d'être plus proches de l'axe de guidage X11, X21 que ne l'est le troisième axe de pivot Z32. Ceci permet d'obtenir, comme déjà expliqué plus haut, une structure compacte et d'améliorer la rigidité du mécanisme porteur 3 en limitant les effets inertiels et les moments fléchissants par rapport aux organes de guidage 53, 54 servant à guider les chariots 11, 21.

Selon une possibilité préférentielle d'application, on utilisera le dispositif manipulateur 1 comme robot cartésien pour la fabrication de nappes de renfort destinées à la constitution de bandages, typiquement de bandages pneumatiques.

De telles nappes de renfort sont réalisées, de manière connue en soi, en juxtaposant des bandelettes 6 formée d'au moins une couche de gomme dans laquelle sont noyés des fils de renforts continus longitudinaux, de préférence métalliques, et en aboutant lesdites bandelettes deux à deux par leurs lisières respectives, afin de former progressivement une nappe de renfort, au sein de laquelle les fils de renfort forment un angle choisi, dit « angle de nappe », par rapport à la direction longitudinale d'extension de ladite nappe de renfort.

Ainsi, l'invention porte en particulier, tel que cela est illustré sur les figures 2 et 3, sur une installation 100 de fabrication de nappes de renfort destinées à la constitution de bandages, de préférence de bandages pneumatiques, ladite installation 100 comprenant un support d'assemblage 7, tel qu'un tapis ou un tambour, ainsi qu'un outil de pose 5 qui est agencé pour acheminer et poser successivement des bandelettes 6 sur le support d'assemblage 7 en aboutant successivement lesdites bandelettes 6 les unes aux autres par leurs lisières respectives, de sorte à constituer progressivement une nappe de renfort.

Ladite installation 100 comporte un dispositif manipulateur 1 selon l'invention dont la plate-forme 4 porte l'outil de pose 5, et dont le module d'asservissement 50 est agencé pour asservir une ou des trajectoires dudit outil de pose 5 qui permettent d'appliquer chaque bandelette 6 considérée sur le support d'assemblage 7.

De préférence, le support d'assemblage 7 présente une forme de révolution autour d'un axe dit « axe de support d'assemblage » X7, par exemple une forme cylindrique de base circulaire ou, de préférence, une forme toroïdale, ici convexe.

Le dispositif manipulateur 1 est alors de préférence agencé de sorte que le premier chariot 11 et le second chariot 21 soient guidés sur le socle 2 selon un même axe de guidage X11, X21 rectiligne, qui est parallèle à l'axe de support d'assemblage X7.

Ainsi, on peut avantageusement poser les bandelettes en conférant au siège 30, et donc à la plate-forme 4 et à l'outil de pose 5, un simple mouvement transverse à la surface du support d'assemblage 7, orienté parallèlement à l'axe de support d'assemblage X7.

Simultanément, le support d'assemblage 7 pourra être entraîné en rotation autour de son axe X7, de telle sorte que la combinaison de la rotation du support d'assemblage 7 et du mouvement de pose axial de l'outil 5 se traduise par une pose des bandelettes 6 selon un angle de nappe que l'on aura librement choisi, par rapport à la direction longitudinale de la nappe de renfort en cours de constitution.

La direction longitudinale de la nappe correspondra ici de préférence ici à l'équateur de la forme de révolution du support d'assemblage 7, c'est-à-dire à la ligne fictive définie par l'intersection de la surface radialement externe dudit support d'assemblage et d'un plan équatorial qui est normal à l'axe de support d'assemblage X7 et qui divise axialement ledit support d'assemblage en deux hémisphères sensiblement voire exactement symétriques. En pratique, ledit plan équatorial passe de préférence par le point radialement le plus externe de la surface du support d'assemblage 7.

De préférence, l'outil de pose 5 comprend un organe applicateur 101, du genre galet presseur, qui est agencé pour venir appliquer et presser une bandelette 6 contre le support d'assemblage 7.

Le galet presseur 101 est de préférence agencé de telle manière que, lorsqu'une bandelette 6 se trouve sur ledit galet presseur 101, la surface apparente de la bandelette 6, qui vient au contact du support d'assemblage 7 sous la pression du galet 101, est située à l'aplomb du troisième axe de pivot Z32.

Ceci permet avantageusement de faire coïncider l'orientation en lacet de la plate-forme 4, telle que décidée et ajustée par le module d'asservissement 50, avec l'orientation en lacet de la bandelette 6 par rapport à la surface du support d'assemblage 7 lors de la pose. Il est donc facile de suivre une surface d'assemblage de toute nature, y compris une surface courbe ou gauche qui nécessite de modifier dynamiquement l'orientation absolue en lacet du galet presseur 101 pour assurer une trajectoire de pose qui soit, en chacun de l'ensemble des points par lesquels passe successivement ladite trajectoire de pose, tangente à ladite surface du support d'assemblage 7.

De préférence, l'outil de pose 5 comprend un mât 102 orientable, qui est monté sur la plate-forme 4 et qui porte l'organe applicateur 101.

Le mât 102 porte aussi de préférence un module d'alimentation 103 agencé pour acheminer les bandelettes 6 à poser jusqu'audit organe applicateur 101, selon une direction d'alimentation, ici de préférence rectiligne, qui correspond à la direction longitudinale L6 des bandelettes acheminées et qui converge vers le galet applicateur 101.

Le module d'alimentation 103 peut notamment comprendre un système d'admission 103A destiné à produire ou à recevoir une bande de gomme continue, renforcée de fils de renforts longitudinaux continus, puis une coupeuse 103B, permettant de couper la bande de gomme continue à intervalles longitudinaux définis, pour générer les bandelettes 6 successives, et un bec de distribution 103C assurant, par exemple au moyen d'une rangée de rouleaux, le guidage de la bandelette 6 selon la direction d'alimentation L6 et la sortie de la bandelette 6 sur le galet presseur 101.

De préférence, ledit mât 102 est pourvu d'organes de basculement en tangage 104, qui sont agencés de sorte à permettre audit mât 102, et ainsi à l'organe applicateur 101, de basculer en tangage par rapport à la plate-forme 4, autour d'un axe de tangage Y104.

Ledit axe de tangage Y104, de préférence horizontal, est préférentiellement contenu dans le plan de référence P0 qui est normal aux premier, second et troisième axes de pivot (Z12, Z22, Z32). L'orientation en lacet dudit axe de tangage Y104 correspond ainsi à l'orientation en lacet de la plate-forme 4. En particulier, lorsque la plate-forme 4 est orientée selon son orientation absolue de référence en lacet A_ref, l'axe de tangage Y104 forme avec l'axe des abscisses X, dans le plan de référence P0, un angle égal à la valeur de ladite orientation absolue de référence en lacet A_ref, ici par exemple préférentiel un angle de 90 degrés sur les figures 1, 9, 10.

De préférence, lorsque l'organe applicateur 101 se trouve sur la ligne équatoriale de la surface du support d'assemblage 7, ledit axe de tangage Y104 est perpendiculaire à l'axe de support d'assemblage X7, et donc ici parallèle au second axe principal Y (l'axe des ordonnées) du référentiel absolu attaché au socle 2.

La présence d'organes de basculement en tangage 104 permet avantageusement une sélection, et au besoin une inversion, de l'orientation de l'angle dit « angle de nappe » selon lequel on souhaite incliner la bandelette 6 considérée, et donc plus particulièrement les renforts longitudinaux de ladite bandelette 6, par rapport à la direction longitudinale de la nappe de renfort en cours de constitution sur le support d'assemblage.

On peut ainsi réaliser, au moyen du même outil de pose 5, soit des nappes de renfort avec angle de nappe à droite, soit des nappes de renfort avec angle de nappe à gauche, qui pourront ensuite être superposée pour former des renforts croisés dans la zone sommet du bandage pneumatique.

Les organes de basculement en tangage 104 pourront notamment comprendre un roulement à billes, par lequel le mât 102 s'articule sur la plate-forme 4 selon l'axe de tangage Y104.

Ledit axe de tangage Y104 est de préférence concourant au troisième axe de pivot Z32.

Le galet presseur 101 pourra avantageusement être monté mobile en translation le long de l'axe de tangage Y104, de préférence disposé radialement par rapport au support d'assemblage 7, et être précontraint en direction dudit support d'assemblage 7, par exemple au moyen d'un ressort.

Un galet presseur 101 ainsi suspendu sur ressort permettra notamment d'accommoder les épaisseurs ou les variations d'épaisseur de bandelettes 6 et de réguler la pression de contact avec laquelle on applique les bandelettes contre le support d'assemblage 7

On notera que, de préférence, la direction d'alimentation correspondant à la direction longitudinale L6 des bandelettes acheminées, l'axe de tangage Y104, et le troisième axe de pivot Z32, sont concourants et se croisent en un point dit « point de visée » M0 situé à la surface du support d'assemblage 7, tel que cela est visible sur la figure 3.

Grâce à cette géométrie spécifique, le module d'asservissement 50 pourra avantageusement contrôler parfaitement, de manière relativement simple sur les différents axes concernés, la trajectoire de pose et les conditions de pose de la bandelette 6 à l'endroit précis ou s'opère la mise en contact de ladite bandelette 6 avec la surface du support d'assemblage 7.

Par ailleurs, le mât 102 pourra comprendre des organes de retournement 105 agencés pour opérer un retournement du module d'alimentation 103, en rotation R105 autour de la direction d'alimentation correspondant à la direction longitudinale L6 des bandelettes 6 acheminées.

Avantageusement on pourra ainsi, lorsque la bandelette 6 est découpée en biseau selon un angle de coupe qui correspond à l'angle de nappe visé, faire passer la bandelette 6 face dessus dessous (et inversement), et ainsi inverser le signe dudit angle de coupe, pour adapter le signe de l'angle de coupe au signe de l'angle de nappe voulu.

Tel que cela est visible sur la figure 1, les organes de retournement 105 pourront par exemple comprendre un pignon de retournement 105A fixé au module d'alimentation 103, et sur lequel engrène une crémaillère 105B mue par un vérin 105C.

## Revendications

1. Dispositif manipulateur (1) comprenant un socle (2) ainsi qu'un mécanisme porteur (3) qui est supporté par ledit socle (2) et qui porte une plate-forme (4) destinée à recevoir un objet à manipuler (5), tel qu'un outil, dans lequel ledit mécanisme porteur (3) forme un triangle articulé (8) qui comprend :
- un premier bras (10) qui est porté par un premier chariot (11) guidé en translation sur le socle (2), et qui s'articule avec ledit premier chariot (11) selon une première liaison pivot (12) autour d'un premier axe de pivot (Z12) qui forme un premier sommet du triangle articulé (8),
- un second bras (20) qui est porté par un second chariot (21), distinct du premier chariot (11) et guidé en translation sur le socle (2), et qui s'articule avec ledit second chariot (21) selon une seconde liaison pivot (22) autour d'un second axe de pivot (Z22), lequel est parallèle au premier axe de pivot (Z12) et forme un second sommet du triangle articulé (8),
- un siège (30), qui offre un support à la plate-forme (4) et qui correspond à une intersection du premier bras (10) et du second bras (20), intersection au niveau de laquelle lesdits premier et second bras (10, 20) s'articulent l'un par rapport à l'autre selon une troisième liaison pivot (32), autour d'un troisième axe de pivot (Z32) qui est parallèle au premier axe de pivot (Z12) et au second axe de pivot (Z22) et qui forme un troisième sommet du triangle articulé (8),
- un module d'asservissement (50) qui pilote d'une part un premier moteur (51), propre au premier chariot (11), et d'autre part un second moteur (52), propre au second chariot (21) et distinct du premier moteur (51), de sorte à pouvoir asservir distinctement les mouvements respectifs de translation du premier et du second chariot (11, 21) par rapport au socle (2), afin de pouvoir modifier la position du siège (30) par rapport au socle (2), et étant **caractérisé par**
- une interface d'orientation en lacet (40) qui comprend une quatrième liaison pivot (42), dite « pivot différentiel de lacet » (42), selon laquelle la plate-forme (4) s'articule sur le siège (30), à la fois relativement au premier bras (10) et relativement au second bras (20), selon un mouvement de rotation en lacet dit « mouvement différentiel en lacet » (R42), autour d'un quatrième axe de pivot dit « axe différentiel de lacet » (Z42) qui est coaxial au troisième axe de pivot (Z32).

2. Dispositif selon la revendication 1 **caractérisé en ce que** l'interface d'orientation en lacet (40) comprend un système compensateur (44) qui est agencé pour coopérer avec le pivot différentiel de lacet (42) de manière d'une part à conférer à la plate-forme (4), dans un référentiel attaché au socle (2), dit « référentiel absolu », une orientation angulaire déterminée en lacet autour de l'axe différentiel de lacet (Z42) coaxial au troisième axe de pivot (Z32), dite « orientation absolue de référence en lacet » (A4_ref), et d'autre part à pouvoir maintenir automatiquement la plate-forme (4) dans cette orientation absolue de référence en lacet (A4_ref) par rapport au socle (2), dans ledit référentiel absolu attaché au socle, lors de déplacements du premier et/ou du second chariot (11, 21) qui modifient la distance, dite « entraxe de base » (d0), qui sépare le premier axe de pivot (Z12) du second axe de pivot (Z22).

3. Dispositif selon la revendication 1 ou 2 **caractérisé en ce que** l'interface d'orientation en lacet (40) comprend un moteur d'orientation en lacet (43), qui est piloté par le module d'asservissement (50) et qui est agencé de manière à, lorsque ledit moteur d'orientation en lacet (43) est activé, entraîner la plate-forme (4) selon le mouvement différentiel en lacet (R42), autour de l'axe différentiel de lacet (Z42), par rapport aux premier et second bras (10, 20).

4. Dispositif selon les revendications 2 et 3 **caractérisé en ce que** le module d'asservissement (50) prend pour référence, pour définir une origine à partir de laquelle ledit module d'asservissement pilote le moteur d'orientation en lacet (43) et quantifie les mouvements différentiels en lacet générés par l'activation dudit moteur d'orientation en lacet, la configuration que présente ledit moteur d'orientation en lacet (43) lorsque la plate-forme est orientée conformément à l'orientation absolue de référence en lacet (A4_ref).

5. Dispositif selon l'une des revendications précédentes **caractérisé en ce que** l'interface d'orientation en lacet (40) comprend d'une part une portion de couronne dentée (47) circulaire, qui est centrée sur le troisième axe de pivot (Z32) et qui relie le premier bras (10) au second bras (20) en étant fixée en position invariante sur le premier bras (10) et guidée en coulissement sur le second bras (20) à une distance radiale fixe du troisième axe de pivot (Z32), de sorte à pouvoir accommoder les déplacements en écartement angulaire ou en rapprochement angulaire des premier et second bras (10, 20) induits par les déplacements du premier chariot (11) et/ou du second chariot (21), et d'autre part un pignon (46), qui engrène sur ladite portion de couronne dentée (47), et qui est couplé à un moteur d'orientation en lacet (43), lui-même embarqué sur la plate-forme (4), de telle sorte que l'on peut piloter sélectivement l'interface d'orientation en lacet (40) en choisissant parmi une pluralité de régimes de fonctionnement distincts comprenant :
- un premier régime de fonctionnement, dit « régime de compensation simple », dans lequel le moteur d'orientation en lacet (43) est activé dans une mesure juste nécessaire et suffisante pour que l'engrènement roulant du pignon (46) sur la portion de couronne dentée (47) assure un maintien de l'orientation en lacet absolue de ladite plate-forme (4) par rapport au socle (2), en réalisant ainsi une compensation des mouvements des premier et second bras (10, 20) qui sont induits par le déplacement de l'un et/ou l'autre des premier et second chariots (11, 21) ; ,
- un second régime de fonctionnement, dit « régime de réorientation active », dans lequel le moteur d'orientation en lacet (43) est activé de manière à entraîner le pignon (46) dans une mesure telle que l'engrènement roulant du pignon (46) sur la portion de couronne dentée (47) provoque une modification active de l'orientation absolue en lacet de la plate-forme (4) par rapport au socle (2).

6. Dispositif selon l'une des revendications précédentes **caractérisé en ce que** le module d'asservissement (50) contient au moins une loi de pilotage qui est conçue pour piloter une accélération du siège (30), ladite accélération étant considérée dans un plan de référence (P0) qui est normal aux premier, second et troisième axes de pivot (Z12, Z22, Z32), et en un point dit « centre de siège » qui correspond à l'intersection du troisième axe de pivot (Z32) avec ledit plan de référence, et **en ce que** ladite loi de pilotage permet de définir ladite accélération du siège (30) à partir d'une expression de degré N par rapport au temps, avec N entier égal ou supérieur à 1, et de préférence au moins du second degré par rapport au temps, voire du troisième degré par rapport au temps ou d'un degré supérieur à trois.

7. Dispositif selon l'une des revendications précédentes **caractérisé en ce que** le premier chariot (11) est guidé en translation rectiligne par rapport au socle (2) selon un premier axe de guidage (X11) qui est perpendiculaire au premier axe de pivot (Z12), et **en ce que** le second chariot (21) est guidé en translation rectiligne par rapport au socle (2) selon un second axe de guidage (X21) qui est parallèle au premier axe de guidage (X11), et de façon préférentielle qui est coaxial audit premier axe de guidage (X11).

8. Dispositif selon l'une des revendications précédentes **caractérisé en ce que** le premier chariot (11) et le second chariot (21) forment respectivement un premier bloc de bobine (51A) d'un premier moteur (51) linéaire et un second bloc de bobine (52A) d'un second moteur (52) linéaire, distinct du premier moteur (51) linéaire, et **en ce que** les premier et second blocs de bobine (51A, 52A) desdits premier et second moteurs linéaires sont engagés sur un même barreau magnétique (55) commun, qui est fixé sur le socle (2) et qui matérialise un axe de guidage (X11, X21) partagé par le premier chariot (10) et le second chariot (21).

9. Dispositif selon l'une des revendications précédentes **caractérisé en ce que** la distance qui sépare le premier axe de pivot (Z12) du troisième axe de pivot (Z32), dite « premier entraxe » (d1), et la distance qui sépare le second axe de pivot (Z22) de ce même troisième axe de pivot (Z32), dite « second entraxe » (d2), sont invariantes, et de préférence sont égales de sorte que le triangle articulé (8) est isocèle.

10. Installation (100) de fabrication de nappes de renfort destinées à la constitution de bandages, de préférence de bandages pneumatiques, ladite installation (100) comprenant un support d'assemblage (7), tel qu'un tapis ou un tambour, ainsi qu'un outil de pose (5) qui est agencé pour acheminer et poser successivement des bandelettes (6) sur le support d'assemblage (7) en aboutant successivement lesdites bandelettes les unes aux autres par leurs lisières respectives, de sorte à constituer progressivement une nappe de renfort, ladite installation (100) étant **caractérisée en ce qu'**elle comporte un dispositif manipulateur (1) selon l'une des revendications 1 à 9 dont la plate-forme (4) porte l'outil de pose (5), et dont le module d'asservissement (50) est agencé pour asservir une ou des trajectoires dudit outil de pose (5) qui permettent d'appliquer chaque bandelette (6) considérée sur le support d'assemblage (7).

11. Installation (100) selon la revendication 10 **caractérisée en ce que** le support d'assemblage (7) présente une forme de révolution autour d'un axe dit « axe de support d'assemblage » (X7), par exemple une forme cylindrique de base circulaire ou, de préférence, une forme toroïdale, et **en ce que** le premier chariot (11) et le second chariot (21) sont guidés sur le socle (2) selon un même axe de guidage (X11, X21) rectiligne, qui est parallèle à l'axe de support d'assemblage (X7).

12. Installation (100) selon la revendication 10 ou 11 **caractérisée en ce que** l'outil de pose (5) comprend un organe applicateur (101), du genre galet presseur, qui est agencé pour venir appliquer et presser une bandelette (6) contre le support d'assemblage (7), **en ce que** l'outil de pose (5) comprend également un mât (102) orientable, qui est monté sur la plate-forme (4) et qui porte l'organe applicateur (101) ainsi qu'un module d'alimentation (103) agencé pour acheminer les bandelettes (6) à poser jusqu'audit organe applicateur (101), selon une direction d'alimentation qui correspond à la direction longitudinale (L6) des bandelettes acheminées et qui converge vers le galet applicateur (101), **en ce que** ledit mât (102) est pourvu d'organes de basculement en tangage (104), agencés de sorte à permettre audit mât (102), et ainsi à l'organe applicateur (101), de basculer en tangage par rapport à la plate-forme (4), autour d'un axe de tangage (Y104) contenu dans un plan de référence (P0) qui est normal aux premier, second et troisième axes de pivot (Z12, Z22, Z32), et **en ce que** la direction d'alimentation correspondant à la direction longitudinale (L6) des bandelettes acheminées, l'axe de tangage (Y104), et le troisième axe de pivot (Z32), sont concourants et se croisent en un point dit « point de visée » (M0) situé à la surface du support d'assemblage (7).

## Patentansprüche

1. Manipulatorvorrichtung (1), umfassend einen Ständer (2) sowie einen Trägermechanismus (3), welcher von dem Ständer (2) gestützt wird und welcher eine Plattform (4) trägt, die dazu bestimmt ist, einen zu handhabenden Gegenstand (5) wie etwa ein Werkzeug aufzunehmen, wobei der Trägermechanismus (3) ein Gelenkdreieck (8) bildet, welches umfasst:
- einen ersten Arm (10), welcher von einem an dem Ständer (2) translatorisch geführten ersten Schlitten (11) getragen wird und welcher mit dem ersten Schlitten (11) durch eine erste Schwenkverbindung (12) um eine erste Schwenkachse (Z12), welche einen ersten Eckpunkt des Gelenkdreiecks (8) bildet, gelenkig verbunden ist,
- einen zweiten Arm (20), welcher von einem von dem ersten Schlitten (11) verschiedenen und an dem Ständer (2) translatorisch geführten zweiten Schlitten (21) getragen wird und welcher mit dem zweiten Schlitten (21) durch eine zweite Schwenkverbindung (22) um eine zweite Schwenkachse (Z22), welche parallel zur ersten Schwenkachse (Z12) ist und einen zweiten Eckpunkt des Gelenkdreiecks (8) bildet, gelenkig verbunden ist,
- einen Sitz (30), welcher der Plattform (4) eine Abstützung bietet und welcher einem Schnittpunkt des ersten Armes (10) und des zweiten Armes (20) entspricht, wobei an diesem Schnittpunkt der erste und der zweite Arm (10, 20) durch eine dritte Schwenkverbindung (32) um eine dritte Schwenkachse (Z32), welche parallel zur ersten Schwenkachse (Z12) und zur zweiten Schwenkachse (Z22) ist und welche einen dritten Eckpunkt des Gelenkdreiecks (8) bildet, gelenkig miteinander verbunden sind,
- ein Steuermodul (50), welches einerseits einen zum ersten Schlitten (11) gehörigen ersten Motor (51) und andererseits einen zum zweiten Schlitten (21) gehörigen und vom ersten Motor (51) verschiedenen zweiten Motor (52) steuert, so dass es die jeweiligen Translationsbewegungen des ersten und des zweiten Schlittens (11, 21) bezüglich des Ständers (2) unterschiedlich steuern kann, um die Position des Sitzes (30) bezüglich des Ständers (2) ändern zu können,
und **gekennzeichnet durch**
- eine Gierausrichtungs-Schnittstelle (40), welche eine "differentielle Gier-Schwenkverbindung" (42) genannte vierte Schwenkverbindung (42) umfasst, durch welche die Plattform (4) am Sitz (30) gleichzeitig relativ zum ersten Arm (10) und relativ zum zweiten Arm (20) gelenkig angebracht ist, für eine "differentielle Gierbewegung" genannte Gierrotationsbewegung (R42) um eine "differentielle Gierachse" genannte vierte Schwenkachse (Z42), welche koaxial mit der dritten Schwenkachse (Z32) ist.

2. Vorrichtung nach Anspruch 1, **dadurch gekennzeichnet, dass** die Gierausrichtungs-Schnittstelle (40) ein Ausgleichssystem (44) umfasst, welches dazu eingerichtet ist, mit der differentiellen Gier-Schwenkverbindung (42) zusammenzuwirken, um einerseits der Plattform (4) in einem auf den Ständer (2) bezogenen, "absolutes Koordinatensystem" genannten Koordinatensystem eine bestimmte Gierwinkelausrichtung um die mit der dritten Schwenkachse (Z32) koaxiale differentielle Gierachse (Z42) zu verleihen, "absolute Referenz-Gierausrichtung" (A4_ref) genannt, und um andererseits bei Verlagerungen des ersten und/oder des zweiten Schlittens (11, 12), welche den "Basisachsabstand" (d0) genannten Abstand verändern, der die erste Schwenkachse (Z12) von der zweiten Schwenkachse (Z22) trennt, die Plattform (4) automatisch in dieser absoluten Referenz-Gierausrichtung (A4_ref) bezüglich des Ständers (2) in dem auf den Ständer bezogenen absoluten Koordinatensystem halten zu können.

3. Vorrichtung nach Anspruch 1 oder 2, **dadurch gekennzeichnet, dass** die Gierausrichtungs-Schnittstelle (40) einen Gierausrichtungs-Motor (43) umfasst, welcher von dem Steuermodul (50) gesteuert wird und welcher so eingerichtet ist, dass, wenn der Gierausrichtungs-Motor (43) aktiviert ist, er die Plattform (4) zur differentiellen Gierbewegung (R42) um die differentielle Gierachse (Z42) bezüglich des ersten und des zweiten Armes (10, 20) antreibt.

4. Vorrichtung nach den Ansprüchen 2 und 3, **dadurch gekennzeichnet, dass** das Steuermodul (50) als Bezugsbasis, um einen Ursprung zu definieren, von dem ausgehend das Steuermodul den Gierausrichtungs-Motor (43) steuert und die durch die Aktivierung des Gierausrichtungs-Motors erzeugten differentiellen Gierbewegungen quantifiziert, die Konfiguration nimmt, welche der Gierausrichtungs-Motor (43) aufweist, wenn die Plattform gemäß der absoluten Referenz-Gierausrichtung (A4_ref) ausgerichtet ist.

5. Vorrichtung nach einem der vorhergehenden Ansprüche, **dadurch gekennzeichnet, dass** die Gierausrichtungs-Schnittstelle (40) einerseits einen Abschnitt eines kreisförmigen Zahnkranzes (47) umfasst, welcher auf der dritten Schwenkachse (Z32) zentriert ist und welcher den ersten Arm (10) mit dem zweiten Arm (20) verbindet, wobei er in einer unveränderlichen Position am ersten Arm (10) befestigt ist und am zweiten Arm (20) in einem festen radialen Abstand von der dritten Schwenkachse (Z32) gleitend geführt wird, so dass er die Verlagerungen des ersten und des zweiten Armes (10, 20) mit Vergrößerung oder Verkleinerung ihres Winkelabstands, die durch die Verlagerungen des ersten Schlittens (11) und/oder des zweiten Schlittens (21) hervorgerufen werden, aufnehmen kann, und andererseits ein Ritzel (46), das mit dem Zahnkranzabschnitt (47) in Eingriff steht und das mit einem Gierausrichtungs-Motor (43) gekoppelt ist, der seinerseits auf der Plattform (4) angebracht ist, derart, dass die Gierausrichtungs-Schnittstelle (40) selektiv gesteuert werden kann, indem zwischen mehreren verschiedenen Betriebsarten gewählt wird, welche umfassen:
- eine erste Betriebsart, "Betriebsart des einfachen Ausgleichs" genannt, in welcher der Gierausrichtungs-Motor (43) in einem Maße aktiviert wird, das gerade notwendig und hinreichend dafür ist, dass der Rolleingriff des Ritzels (46) am Zahnkranzabschnitt (47) eine Beibehaltung der absoluten Gierausrichtung der Plattform (4) bezüglich des Ständers (2) sicherstellt, wobei somit eine Ausgleich der Bewegungen des ersten und zweiten Armes (10, 20) vorgenommen wird, welche durch die Verlagerung des einen und/oder des anderen von dem ersten und dem zweiten Schlitten (11, 21) hervorgerufen werden;
- eine zweite Betriebsart, "Betriebsart der aktiven Neuausrichtung" genannt, in welcher der Gierausrichtungs-Motor (43) so aktiviert wird, dass er das Ritzel (46) in einem solchen Maße antreibt, dass der Rolleingriff des Ritzels (46) am Zahnkranzabschnitt (47) eine aktive Änderung der absoluten Gierausrichtung der Plattform (4) bezüglich des Ständers (2) hervorruft.

6. Vorrichtung nach einem der vorhergehenden Ansprüche, **dadurch gekennzeichnet, dass** das Steuermodul (50) mindestens ein Steuerungsgesetz enthält, welches dafür ausgelegt ist, eine Beschleunigung des Sitzes (30) zu steuern, wobei diese Beschleunigung in einer Referenzebene (P0), welche zur ersten, zweiten und dritten Schwenkachse (Z12, Z22, Z32) senkrecht ist, und in einem "Sitzmittelpunkt" genannten Punkt, welcher dem Schnittpunkt der dritten Schwenkachse (Z32) mit der Referenzebene entspricht, betrachtet wird, und dadurch, dass das Steuerungsgesetz ermöglicht, die Beschleunigung des Sitzes (30) anhand eines Ausdrucks N-ten Grades bezüglich der Zeit, wobei N eine ganze Zahl größer oder gleich 1 ist, und vorzugsweise mindestens zweiten Grades bezüglich der Zeit oder sogar dritten Grades bezüglich der Zeit oder von einem Grad größer als drei zu definieren.

7. Vorrichtung nach einem der vorhergehenden Ansprüche, **dadurch gekennzeichnet, dass** der erste Schlitten (11) geradlinig translatorisch bezüglich des Ständers (2) entlang einer ersten Führungsachse(X11) geführt wird, welche zur ersten Schwenkachse (Z12) senkrecht ist, und dadurch, dass der zweite Schlitten (21) geradlinig translatorisch bezüglich des Ständers (2) entlang einer zweiten Führungsachse(X21) geführt wird, die parallel zur ersten Führungsachse (X11) ist und die vorzugsweise koaxial mit der ersten Führungsachse (X11) ist.

8. Vorrichtung nach einem der vorhergehenden Ansprüche, **dadurch gekennzeichnet, dass** der erste Schlitten (11) und der zweite Schlitten (12) einen ersten Spulenblock (51A) eines ersten Linearmotors (51) bzw. einen zweiten Spulenblock (52A) eines vom ersten Linearmotor (51) verschiedenen zweiten Linearmotors (52) bilden, und dadurch, dass der erste und der zweite Spulenblock (51A, 52A) des ersten und zweiten Linearmotors auf ein und demselben gemeinsamen Magnetstab (55) angebracht sind, welcher am Ständer (2) befestigt ist und welcher eine Führungsachse (X11, X21) verkörpert, die vom ersten Schlitten (10) und vom zweiten Schlitten (21) gemeinsam verwendet wird.

9. Vorrichtung nach einem der vorhergehenden Ansprüche, **dadurch gekennzeichnet, dass** der Abstand, welcher die erste Schwenkachse (Z12) von der dritten Schwenkachse (Z32) trennt, "erster Achsabstand" (d1) genannt, und der Abstand, welcher die zweite Schwenkachse (Z22) von derselben dritten Schwenkachse (Z32) trennt, "zweiter Achsabstand" (d2) genannt, unveränderlich sind und vorzugsweise gleich sind, so dass das Gelenkdreieck (8) gleichschenklig ist.

10. Anlage (100) zur Herstellung von Verstärkungslagen, die für den Aufbau von Reifen, vorzugsweise von Luftreifen, bestimmt sind, wobei die Anlage (100) einen Montageträger (7) umfasst, wie etwa ein Band oder eine Trommel, sowie ein Legewerkzeug (5), welches dazu eingerichtet ist, nacheinander Streifen (6) zum Montageträger (7) zu transportieren und auf ihn zu legen und dabei die Streifen nacheinander mit ihren jeweiligen Kanten aneinander anzulegen, um so nach und nach eine Verstärkungslage zu bilden, wobei die Anlage (100) **dadurch gekennzeichnet ist, dass** sie eine Manipulatorvorrichtung (1) nach einem der Ansprüche 1 bis 9 aufweist, deren Plattform (4) das Legewerkzeug (5) trägt und deren Steuermodul (50) dazu eingerichtet ist, eine oder mehrere Trajektorien des Legewerkzeugs (5) zu steuern, welche ermöglichen, jeden betrachteten Streifen (6) auf dem Montageträger (7) anzubringen.

11. Anlage (100) nach Anspruch 10, **dadurch gekennzeichnet, dass** der Montageträger (7) eine Form eines Rotationskörpers mit einer "Montageträgerachse" (X7) genannten Achse aufweist, zum Beispiel eine zylindrische Form mit kreisförmiger Basis oder vorzugsweise eine Torusform, und dadurch, dass der erste Schlitten (11) und der zweite Schlitten (21) am Ständer (2) entlang ein und derselben geraden Führungsachse (X11, X21) geführt werden, welche parallel zur Montageträgerachse (X7) ist.

12. Anlage (100) nach Anspruch 10 oder 11, **dadurch gekennzeichnet, dass** das Legewerkzeug (5) ein Anlegeorgan (101) von der Art einer Andruckrolle umfasst, das dazu eingerichtet ist, einen Streifen (6) an den Montageträger (7) anzulegen und anzudrücken, dadurch, dass das Legewerkzeug (5) außerdem einen ausrichtbaren Schaft (102) umfasst, welcher auf der Plattform (4) angebracht ist und welcher das Anlegeorgan (101) trägt, sowie ein Zuführungsmodul (103), das dazu eingerichtet ist, die abzulegenden Streifen (6) in einer Zuführungsrichtung bis zu dem Anlegeorgan (101) zu transportieren, welche der Längsrichtung (L6) der transportierten Streifen entspricht und welche auf die Andruckrolle (101) zuläuft, dadurch, dass der Schaft (102) mit Nickbewegungsorganen (104) versehen ist, die dazu eingerichtet sind, dem Schaft (102) sowie dem Anlegeorgan (101) zu ermöglichen, Nickbewegungen bezüglich der Plattform (4) um eine Nickachse (Y104) auszuführen, die in einer Referenzebene (P0) enthalten ist, welche zur ersten, zweiten und dritten Schwenkachse (Z12, Z22, Z32) senkrecht ist, und dadurch, dass die der Längsrichtung (L6) der transportierten Streifen entsprechende Zuführungsrichtung, die Nickachse (Y104) und die dritte Schwenkachse (Z32) durch denselben Punkt gehen und sich in einem "Zielpunkt" genannten Punkt (M0) kreuzen, der sich an der Oberfläche des Montageträgers (7) befindet.

## Claims

1. Manipulator device (1) comprising a pedestal (2) and a carrying mechanism (3) which is supported by said pedestal (2) and which carries a platform (4) intended to receive an object to be manipulated (5), such as a tool, wherein the said carrying mechanism (3) forms an articulated triangle (8) which comprises:
- a first arm (10) which is borne by a first carriage (11) guided in translation on the pedestal (2), and which is articulated with said first carriage (11) on a first pivot link (12) about a first pivot axis (Z12) which forms a first vertex of articulated triangle (8),
- a second arm (20) which is borne by a second carriage (21), distinct from the first carriage (11) and guided in translation on the pedestal (2), and which is articulated with said second carriage (21) on a second pivot link (22) about a second pivot axis (Z22), which is parallel to the first pivot axis (Z12) and forms a second vertex of the articulated triangle (8),
- a seat (30), which offers a support to the platform (4) and which corresponds to an intersection of the first arm (10) and of the second arm (20), an intersection at which said first and second arms (10, 20) are articulated with respect to one another on a third pivot link (32), about a third pivot axis (Z32) which is parallel to the first pivot axis (Z12) and to the second pivot axis (Z22) and which forms a third vertex of the articulated triangle (8),
- a servocontrol module (50) which controls, on the one hand, a first motor (51), specific to the first carriage (11), and, on the other hand, a second motor (52), specific to the second carriage (21) and distinct from the first motor (51), so as to be able to distinctly servocontrol the respective translational movements of the first carriage and the second carriage (11, 21) with respect to the pedestal (2), in order to be able to modify the position of the seat (30) with respect to the pedestal (2),
and being **characterized by**
- a yaw-orientation interface (40) which comprises a fourth pivot link (42), called "yaw differential pivot" (42), by which the platform (4) is articulated on the seat (30), both relative to the first arm (10) and relative to the second arm (20), by a yaw rotational movement called "yaw differential movement" (R42), about a fourth pivot axis called "yaw differential axis" (Z42) which is coaxial to the third pivot axis (Z32).

2. Device according to Claim 1, **characterized in that** the yaw orientation interface (40) comprises a compensating system (44) which is arranged to cooperate with the yaw differential pivot (42) so as, on the one hand, to confer on the platform (4), in a reference frame attached to the pedestal (2), called "absolute reference frame", a determined yaw angular orientation about the yaw differential axis (Z42) coaxial to the third pivot axis (Z32), called "absolute yaw reference orientation" (A4_ref), and, on the other hand, to be able to automatically keep the platform (4) in this absolute yaw reference orientation (A4_ref) with respect to the pedestal (2), in said absolute reference frame attached to the pedestal, during displacements of the first carriage and/or of the second carriage (11, 21) which modify the distance, called "base centre distance" (d0), which separates the first pivot axis (Z12) from the second pivot axis (Z22).

3. Device according to Claim 1 or 2, **characterized in that** the yaw orientation interface (40) comprises a yaw orientation motor (43), which is controlled by the servocontrol module (50) and which is arranged so as to, when said yaw orientation motor (43) is activated, drive the platform (4) by the yaw differential movement (R42), about the yaw differential axis (Z42), with respect to the first and second arms (10, 20).

4. Device according to Claims 2 and 3, **characterized in that** the servocontrol module (50) takes for reference, to define an origin from which said servocontrol module controls the yaw orientation motor (43) and quantifies the yaw differential movements generated by the activation of said yaw orientation motor, the configuration that said yaw orientation motor (43) has when the platform is oriented in accordance with the absolute yaw reference orientation (A4_ref).

5. Device according to one of the preceding claims, **characterized in that** the yaw orientation interface (40) comprises, on the one hand, a toothed, circular crown ring portion (47), which is centred on the third pivot axis (Z32) and which links the first arm (10) to the second arm (20) by being fixed in an invariant position on the first arm (10) and slidingly guided on the second arm (20) at a fixed radial distance from the third pivot axis (Z32), so as to be able to accommodate the angular separation or angular convergence displacement of the first and second arms (10, 20) induced by the displacements of the first carriage (11) and/or of the second carriage (21), and, on the other hand, a pinion (46), which meshes on said toothed crown ring portion (47), and which is coupled to a yaw orientation motor (43), which is itself embedded on the platform (4), such that it is possible to selectively control the yaw orientation interface (40) by choosing from among a plurality of distinct operating regimes comprising:
- a first operating regime, called "simple compensation regime", in which the yaw orientation motor (43) is activated to an extent that is just necessary and sufficient for the rolling meshing of the pinion (46) on the toothed crown ring portion (47) to ensure that the absolute yaw orientation of said platform (4) with respect to the pedestal (2) is maintained, by thus producing a compensation of the movements of the first and second arms (10, 20) which are induced by the displacement of one and/or the other of the first and second carriages (11, 21);
- a second operating regime, called "active reorientation regime", in which the yaw orientation motor (43) is activated so as to drive the pinion (46) to an extent such that the rolling meshing of the pinion (46) on the toothed crown ring portion (47) provokes an active modification of the absolute yaw orientation of the platform (4) with respect to the pedestal (2).

6. Device according to one of the preceding claims, **characterized in that** the servocontrol module (50) contains at least one control law which is designed to control an acceleration of the seat (30), said acceleration being considered in a reference plane (P0) which is normal to the first, second and third pivot axes (Z12, Z22, Z32), and at a point called "seat centre" which corresponds to the intersection of the third pivot axis (Z32) with said reference plane, and **in that** said control law allows said acceleration of the seat (30) to be defined from an expression of degree N with respect to time, with N being an integer equal to or greater than 1, and preferably at least of the second degree with respect to time, even of the third degree with respect to time or of a degree greater than three.

7. Device according to one of the preceding claims, **characterized in that** the first carriage (11) is guided in rectilinear translation with respect to the pedestal (2) on a first guiding axis (X11) which is at right angles to the first pivot axis (Z12), and **in that** the second carriage (21) is guided in rectilinear translation with respect to the pedestal (2) on a second guiding axis (X21) which is parallel to the first guiding axis (X11), and preferentially which is coaxial to said first guiding axis (X11).

8. Device according to one of the preceding claims, **characterized in that** the first carriage (11) and the second carriage (21) respectively form a first coil pack (51A) of a first linear motor (51) and a second coil pack (52A) of a second linear motor (52), distinct from the first linear motor (51), and **in that** the first and second coil packs (51A, 52A) of said first and second linear motors are engaged on one and the same common magnetic bar (55), which is fixed onto the pedestal (2) and which embodies a guiding axis (X11, X21) shared by the first carriage (10) and the second carriage (21).

9. Device according to one of the preceding claims, **characterized in that** the distance which separates the first pivot axis (Z12) from the third pivot axis (Z32), called "first centre distance" (d1), and the distance which separates the second pivot axis (Z22) from this same third pivot axis (Z32), called "second centre distance" (d2), are invariant, and preferably are equal such that the articulated triangle (8) is an isosceles triangle.

10. Installation (100) for manufacturing reinforcing plies intended for the construction of tyres, preferably pneumatic tyres, said installation (100) comprising an assembly support (7), such as a belt or a drum, and a laying tool (5) which is arranged to convey and lay, in succession, strips (6) on the assembly support (7) by successively butt-jointing said strips to one another by their respective selvedges, so as to progressively construct a reinforcing ply, said installation (100) being **characterized in that** it comprises a manipulator device (1) according to one of Claims 1 to 9 in which the platform (4) carries the laying tool (5), and in which the servocontrol module (50) is arranged to servocontrol one or more of the trajectories of said laying tool (5) which allow each strip (6) considered to be applied onto the assembly support (7).

11. Installation (100) according to Claim 10, **characterized in that** the assembly support (7) has a form of revolution about an axis called "assembly support axis" (X7), for example a cylindrical form of circular base or, preferably, a toroidal form, and **in that** the first carriage (11) and the second carriage (21) are guided on the pedestal (2) on one and the same rectilinear guiding axis (X11, X21), which is parallel to the assembly support axis (X7).

12. Installation (100) according to Claim 10 or 11, **characterized in that** the laying tool (5) comprises an applicator member (101), of the pressing roller kind, which is arranged to apply and press a strip (6) against the assembly support (7), **in that** the laying tool (5) also comprises an orientable mast (102), which is mounted on the platform (4) and which carries the applicator member (101) and a feed module (103) arranged to convey the strips (6) to be laid to said applicator member (101), in a feed direction which corresponds to the longitudinal direction (L6) of the conveyed strips and which converges towards the applicator roller (101), **in that** said mast (102) is provided with pitchwise tilting members (104), arranged so as to allow said mast (102), and thus the applicator member (101), to tilt pitchwise with respect to the platform (4), about a pitch axis (Y104) contained in a reference plane (P0) which is normal to the first, second and third pivot axes (Z12, Z22, Z32), and **in that** the feed direction that corresponds to the longitudinal direction (L6) of the conveyed strips, the pitch axis (Y104), and the third pivot axis (Z32) are convergent and intersect at a point called "aiming point" (M0) situated on the surface of the assembly support (7).
